# EUROPEAN PATENT APPLICATION

(11) **EP 4 492 552 A1**
(43) Date of publication of application: **15.01.2025**
(21) Application number: 23765911.5
(22) Date of filing: 03.03.2023
(51) Int. Cl.: H01M 50/269

(54) **BATTERY PACK, ELECTRIC TOOL SYSTEM, SYNCHRONOUS RECTIFICATION CONTROL CIRCUIT, AND SWITCHING POWER SUPPLY**

(30) Priority: 09.03.2022 CN 202210221662; 09.03.2022 CN 202210221652; 09.03.2022 CN 202210221596; 09.03.2022 CN 202210221595; 23.06.2022 CN 202210720461
(71) Applicant: Greenworks (Jiangsu) Co., Ltd., Changzhou, Jiangsu 213023 (CN)
(72) Inventor: LUO, Ming, Changzhou, Jiangsu 213023 (CN); ZHUANG, Xian, Changzhou, Jiangsu 213023 (CN); ZHU, Yanqiang, Changzhou, Jiangsu 213023 (CN); LI, Zhiyuan, Changzhou, Jiangsu 213023 (CN)
(74) Representative: Bergenstråhle & Partners AB
(86) International application number: PCT/CN2023/079599
(87) International publication number: WO 2023/169333

(57) **Abstract**

The disclosure relates to a technical field of power supply, in particular to a battery pack, a synchronous rectification control circuit and a switch power supply. The battery pack includes a housing, at least one battery cell string and a battery interface. The housing includes a housing cavity. The battery cell string is arranged in the housing cavity and includes a plurality of battery cells connected in series. The battery interface is used to connect with power tools with different working voltages. Wherein, through connecting different numbers of the battery cells in the battery cell string, the battery pack may output at least two voltages. The battery pack of the disclosure outputs at least two voltages through connecting different numbers of the battery cells in the battery cell string.

## Description

### CROSS REFERENCE TO RELATED APPLICATION

The present application is a continuation Application of PCT application No. PCT/CN2023/079599 filed on March 03, 2023, which claims the benefit of CN202210221662.6 filed on March 09, 2022, CN202210221652.2 filed on March 09, 2022, CN202210221596.2 filed on March 09, 2022, CN202210221595.8 filed on March 09, 2022, and CN202210720461.0 filed on June 23, 2022. All the above are hereby incorporated by reference for all purposes.

### TECHNICAL FIELD

The disclosure relates to a technical field of power supply, in particular to a battery pack, a power tool system, a synchronous rectification control circuit and a switch power supply.

### BACKGROUND

In recent years, with the development of battery material technology, the application range of lithium batteries has been greatly expanded, extending from some low-power electronic electrical devices to some high-power power electrical devices. However, most ordinary battery packs on the market can only output one voltage, and such battery packs can only provide power for one electrical device. A plurality of the electrical devices with different operating voltages needs to be matched with different battery packs, thus increasing the user's usage cost and bringing inconvenience to the user. In addition, conventional battery pack chargers mostly use single-ended flyback converters. However, single-ended flyback converters have problems such as low output voltage, large output current, and high energy efficiency loss. Not only are they not suitable for cases with high output voltages, but the chip peripheral circuits also require additional circuits to ensure that the chip can work normally, which increases costs. At the same time, conventional single-ended flyback converters mostly adopt the QRC control mode, which has a large energy efficiency loss and low synchronous rectification control accuracy. This easily causes the synchronous rectifier to work in a slightly short-circuit state.

In view of this, it is necessary to design a battery pack, a power tool system, a synchronous rectification control circuit and a switch power supply.

### SUMMARY

**One** or more embodiments of the disclosure provide a battery pack and a power tool system to improve a problem that conventional battery pack has a relatively single implementation method when performing a multi-voltage output.

**One** or more embodiments of the disclosure provide the battery pack and the power tool system including this battery pack. The battery pack includes a housing, at least one battery cell string and a battery interface. The housing includes a housing cavity. The battery cell string is arranged in the housing cavity and includes a plurality of battery cells connected in series. The battery interface is connected to power tools for different working voltages. Wherein, through connecting different numbers of the battery cells in the battery cell string, the battery pack may output at least two voltages.

**An** embodiment of the disclosure further provides the battery pack, which includes the housing, a plurality of the battery cell strings, the battery interface and a switch unit. The housing includes a housing cavity. The plurality of battery cell strings is connected in parallel. The battery interface is configured to be mechanically and electrically connected with power tools with different working voltages, and includes a positive terminal and a negative terminal. The switch unit is connected with the positive terminal and the plurality of battery cell strings respectively, and includes a first state and a second state. Wherein, in the first state, the positive terminal is electrically connected with a first equipotential position on each of the battery cell strings, the battery pack outputs a first voltage through the positive terminal and the negative terminal, in the second state, the positive terminal is electrically connected with a second equipotential position on each of the battery cell strings, and the battery pack outputs a second voltage through the positive terminal and the negative terminal.

**An** embodiment of the disclosure further provides the battery pack, which includes the housing, at least one battery cell string and the battery interface. The housing includes a housing cavity, and the battery cell string is arranged in the housing cavity. The battery cell string includes a first battery cell unit and a second battery cell unit, the first battery cell unit includes a first number of first battery cells connected in series, and the second battery cell unit includes a second number of second battery cells connected in series. The battery interface is arranged on the housing and is used to connect to the power tools with different working voltages. The battery interface includes a plurality of output terminals. Wherein, the first battery cell unit outputs the first voltage through the output terminals, and the second battery cell unit outputs the second voltage through the output terminals.

**An** embodiment of the disclosure further provides the battery pack, which includes the housing, at least one battery cell string and the battery interface. The housing includes a housing cavity, and the battery cell string is arranged in the housing cavity. The battery cell string includes a first battery cell unit, a second battery cell unit and a third battery cell. The first battery cell unit includes the first number of the first battery cells connected in series, the second battery cell unit includes the second number of the second battery cells connected in series, and the third battery cell unit includes a third number of the third battery cells connected in series. The battery interface connectable to the power tools with different working voltages. The battery interface includes the plurality of output terminals. Wherein, the first battery cell unit outputs the first voltage through the output terminals, the second battery cell unit outputs the second voltage through the output terminals, and the third battery cell unit outputs a third voltage through the output terminals.

**One** or more embodiments of the disclosure further provide the battery pack, which includes the housing, the battery interface, and at least one battery cell string. The housing includes a housing cavity. The battery interface connectable to the power tools with different working voltages, and includes the plurality of output terminals. The at least one battery cell string is arranged in the housing cavity and includes a first battery group and a second battery group. The first battery group includes the first number of battery cell units, and the second battery group includes the second number of the battery cell units. The battery cell unit includes the plurality of battery cells connected in parallel, and a number of the battery cell units in the second battery group is greater than a number of battery units in the first battery group. Wherein, the first battery pack outputs the first voltage through the output terminal, and the second battery pack outputs the second voltage through the output terminal.

One or more embodiments of the disclosure further provides the battery pack, which includes the housing, at least one battery cell string, the battery interface and switch unit. The battery cell string includes a first battery cell unit and a second battery cell unit connected in series. The first battery cell unit includes the first number of the first battery cells connected in series, and the second battery cell unit includes the second number of the second battery cells connected in series. The battery interface is used to be mechanically and electrically connected with power tools with different working voltages and includes a first power tool and a second power tool. The first power tool has a first voltage and the second power tool has a second voltage. The battery interface includes a positive terminal and a negative terminal. The switch unit is connected with the positive terminal and the battery cell strings respectively, and includes the first state and the second state. Wherein, in the first state, the first battery cell unit outputs the first voltage through the positive terminal and the negative terminal, and in the second state, the second battery cell unit outputs the second voltage through the positive terminal and the negative terminal.

**One** or more embodiments of the battery pack of the disclosure outputs at least two voltages through connecting different numbers of the battery cells in the battery cell string. In a process of outputting at least two voltages, there is no need to connect the battery cell strings in parallel, which not only simplifies a connection circuit of the battery pack, but also provides a new idea for a multi-voltage output of the battery pack.

**One** or more embodiments of the disclosure further provide the power tool system. The power tool system includes the battery pack, the first power tool and the second power tool. The battery pack has a first voltage output state and a second voltage output state, and includes the housing, the battery interface and at least one battery cell string. The battery cell string includes the first battery cell unit and the second battery cell unit, the first battery cell unit includes the first number of the first battery cells connected in series, and the second battery cell unit includes the second number of second battery cells connected in series. The first number is less than the second number. The first power tool has the first voltage, the second power tool has the second voltage, and the first voltage is less than the second voltage. The first power tool and the second power tool are both provided with a tool interface that matches and connects with the battery interface. When the battery pack is in the first voltage output state, the first number of the battery cells in the battery cell string output the first voltage to the power tool, and when the battery pack is in the second voltage output state, the second number of the battery cells in the battery cell string output the second voltage to the power tool.

One or more embodiments of the disclosure provide the power tool system, and the power tool system includes the battery pack, the first power tool and the second power tool. The battery pack includes the housing, the battery interface and at least one battery cell string. The battery cell string includes the plurality of battery cells connected in series. The first power tool has a first working voltage, and includes a first tool interface matched and connected with the battery interface. The second power tool has a second working voltage, and includes a second tool interface matched and connected with the battery interface. When the first power tool is connected with the battery pack, the first tool interface is connected with the battery pack interface, the first number of the battery cells in the battery cell string output the first voltage to the first power tool. When the second power tool is connected with the battery pack, the second tool interface is connected with the battery pack interface, and the second number of the battery cells in the battery cell string output the second voltage to the second power tool.

**One** or more embodiments of the disclosure further provides the power tool system, which includes the first power tool, the second power tool, the first battery pack and the second battery pack. The first power tool can work at the first working voltage and is provided with the first tool interface. The second power tool can work at the second working voltage and is provided with the second tool interface. The first battery pack is provided with a first battery interface, includes the plurality of battery cells and van output the first working voltage. The second battery pack is provided with a second battery interface, and includes at least one battery cell string. The battery cell string includes the plurality of battery cells connected in series. When the first power tool is connected with the first battery pack, the first tool interface is connected with the first battery interface, and the first battery pack outputs the first working voltage. When the first power tool is connected with the second battery pack, the first tool interface is connected with the second battery interface, and the first number of the battery cells connected in series in the battery cell string output the first working voltage to the first power tool. When the second power tool is connected with the second battery pack, the second tool interface is connected with the second battery interface, and the second number of the battery cells connected in series in the battery cell string output the second working voltage to the second power tool.

**In** the power tool system of one or more embodiments of the disclosure, not only may the first battery pack be coupled with the first power tool to output the first working voltage, but the first power tool and the second power tool may also be interchangeably coupled to the second battery pack, and through connecting different numbers of the battery cells in the second battery pack in series, the first working voltage may be output to the first power tool and the second working voltage may be output to the second power tool accordingly.

**One** or more embodiments of the disclosure further provide a synchronous rectification control circuit, which is applied for a single-ended flyback converter. The synchronous rectification control circuit includes a driving winding, a separating module and a driving module. The driving winding is coupled with a winding at an input winding of the single-ended flyback converter, an non-dotted end of the driving winding are respectively connected with an output end of the separating module and a first input end of the driving module and a dotted end of the driving winding is grounded. An input end of the separating module is connected with a PWM signal, and the output end of the separating module is further connected with a second input end of the driving module. An output end of the driving module is connected with a control end of a synchronous rectifier of the single-ended flyback converter.

One or more embodiments of the disclosure further provide a switch power supply, which includes the single-ended flyback converter and the synchronous rectification control circuit. The synchronous rectification control circuit is used to provide a driving signal for the single-ended flyback converter. Wherein, the synchronous rectification control circuit includes the driving winding, the separating module and the driving module. The driving winding is coupled with the winding at the input winding of the single-ended flyback converter, the non-dotted end of the driving winding are respectively connected with the output end of the separating module and the first input end of the driving module and the dotted end of the driving winding is grounded. The input end of the separating module is connected with the PWM signal, and the output end of the separating module is further connected with the second input end of the driving module. The output end of the driving module is connected with the control end of the synchronous rectifier of the single-ended flyback converter.

The synchronous rectification control circuit and a flyback switching power supply of one or more embodiments of the disclosure are improved on a basis of a conventional synchronous rectification topology circuit, and the single-ended flyback converter and the synchronous rectification control circuit are distinguished. When a device works abnormally or is damaged, the synchronous rectifier will not be damaged due to a damage of a control circuit device or will not be short-circuited. A primary side switch transistor and a secondary synchronous rectifier are controlled simultaneously by controlling a PWM driving chip signal of a primary side transformer half-bridge switch MOS, and a synchronous rectification driving chip is not required, which has a good consistency, is suitable for high-voltage output cases, and reduces product cost.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a first schematic view of a power tool system of the disclosure.
FIG. 2 is a first overall schematic view of a battery pack according to at least one embodiment of the disclosure.
FIG. 3 is a first schematic connection view of a battery cell string of the battery pack according to at least one embodiment of the disclosure.
FIG. 4 is a second schematic connection view of a battery cell string of the battery pack according to at least one embodiment of the disclosure.
FIG. 5 is a second overall schematic view of a battery pack according to at least one embodiment of the disclosure.
FIG. 6 is a first circuit diagram of the battery pack according to at least one embodiment of the disclosure.
FIG. 7 is a second circuit diagram of the battery pack according to at least one embodiment of the disclosure.
FIG. 8 is a first circuit diagram when the battery pack is connected with a power tool according to at least one embodiment of the disclosure.
FIG. 9 is a first discharging logic view when the battery pack is connected with a power tool according to at least one embodiment of the disclosure.
**FIG.** 10 is a first circuit diagram when the battery pack is connected with a charger according to at least one embodiment of the disclosure.
FIG. 11 is a first charging logic view when the battery pack is connected with the charger according to at least one embodiment of the disclosure.
FIG. 12 is a third circuit diagram of the battery pack according to at least one embodiment of the disclosure.
FIG. 13 is a second circuit diagram when the battery pack is connected with the power tool according to at least one embodiment of the disclosure.
FIG. 14 is a second discharging logic view when the battery pack is connected with the power tool according to at least one embodiment of the disclosure.
FIG. 15 is a second circuit diagram when the battery pack is connected with the charger according to at least one embodiment of the disclosure.
FIG. 16 is a second charging logic view when the battery pack is connected with the charger according to at least one embodiment of the disclosure.
FIG. 17 is a fourth circuit diagram of the battery pack according to at least one embodiment of the disclosure.
FIG. 18 is a circuit diagram of the battery pack connected with the power tool and outputting a first voltage according to at least one embodiment of the disclosure.
**FIG.** 19 is a circuit diagram of the battery pack connected with the power tool and outputting a second voltage according to at least one embodiment of the disclosure.
**FIG.** 20 is a third discharging logic view when the battery pack is connected with the power tool according to at least one embodiment of the disclosure.
**FIG.** 21 is a third circuit diagram when the battery pack is connected with the charger according to at least one embodiment of the disclosure.
**FIG.** 22 is a third charging logic view when the battery pack is connected with the charger according to at least one embodiment of the disclosure.
**FIG.** 23 is a fifth circuit diagram of the battery pack according to at least one embodiment of the disclosure.
**FIG.** 24 is a circuit diagram of the battery pack connected with the power tool and outputting the first voltage on a low voltage side according to at least one embodiment of the disclosure.
**FIG.** 25 is a first circuit diagram of the battery pack connected with the power tool and outputting a first voltage on a high voltage side according to at least one embodiment of the disclosure.
**FIG.** 26 is a second circuit diagram of the battery pack connected with the power tool and outputting the second voltage according to at least one embodiment of the disclosure.
**FIG.** 27 is a discharging logic view of the battery pack according to at least one embodiment of the disclosure.
**FIG.** 28 is a fourth circuit diagram when the battery pack is connected with the charger according to at least one embodiment of the disclosure.
**FIG.** 29 is a charging logic view of the battery pack according to at least one embodiment of the disclosure.
**FIG.** 30 is a sixth circuit diagram of the battery pack according to at least one embodiment of the disclosure.
**FIG.** 31 is a seventh circuit diagram of the battery pack according to at least one embodiment of the disclosure.
**FIG.** 32 is an eighth circuit diagram of the battery pack according to at least one embodiment of the disclosure.
**FIG.** 33 is a second schematic view of the power tool system of the disclosure.
**FIG.** 34 is an overall schematic view of a first battery pack according to at least one embodiment of the disclosure.
**FIG.** 35 is an overall schematic view of a second battery pack according to at least one embodiment of the disclosure.
FIG. 36 is an overall schematic view of a third battery pack according to at least one embodiment of the disclosure.
FIG. 37 is a wiring block view of a single-ended flyback converter in the prior art.
FIG. 38 is a schematic view of an internal wiring of the single-ended flyback converter in the prior art.
FIG. 39 is a wiring schematic view of a synchronous rectification control circuit according to a first embodiment of the disclosure.
FIG. 40 is a schematic structural view of a flyback switching power supply according to a second embodiment of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. It should be noted that, the following embodiments and the features in the embodiments can be combined with each other without conflict. It should further be understood that the terms used in the examples of the disclosure are used to describe specific embodiments, instead of limiting the protection scope of the disclosure. The test methods that do not indicate specific conditions in the following examples are usually in accordance with conventional conditions, or conditions recommended by each manufacturer.

It should be noted that terms "upper", "lower", "left", "right", "middle" and "one" quoted in this specification are only for a convenience of description, and are not used to limit a scope of the disclosure. Changes or adjustments in their relative relationships shall also be regarded to be within the scope of the disclosure when there is no substantial change in the technical content.

Considering problems in conventional battery packs in the background technology and a fact that in conventional dual-voltage battery packs, a dual-voltage output is basically achieved by changing a series-parallel relationship between different battery cell strings, which means that a low voltage is output when different battery cell strings are connected in parallel, and a high voltage is output when the different battery cell strings are connected in series, a main difference between conventional technologies lies in a method and a structure of realizing a series-parallel connection between the different battery cell strings. However, a circuit of this method is relatively complicated. Therefore, the disclosure provides a battery pack and a power tool system including the battery pack to create a new multi-voltage output mode of the battery pack.

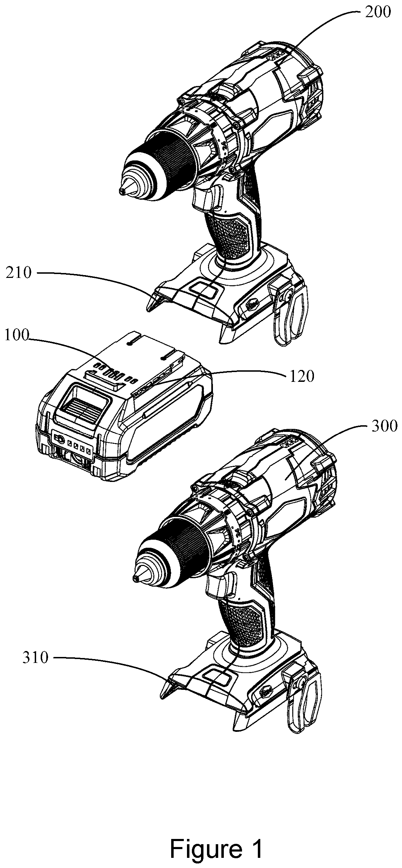

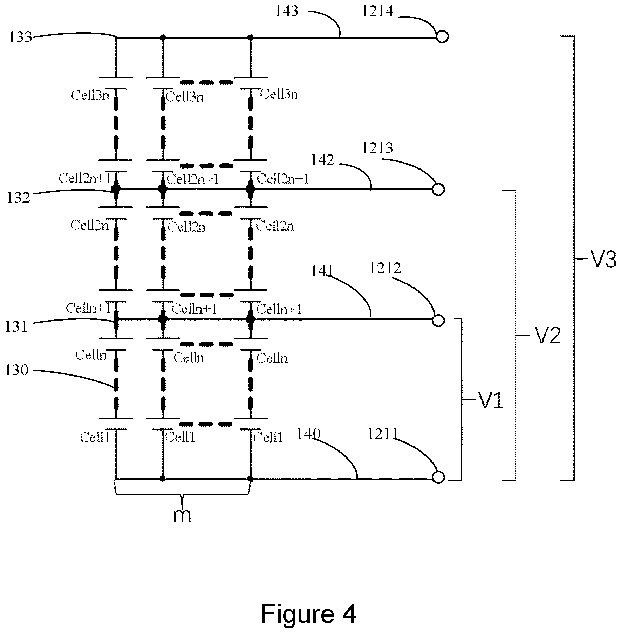

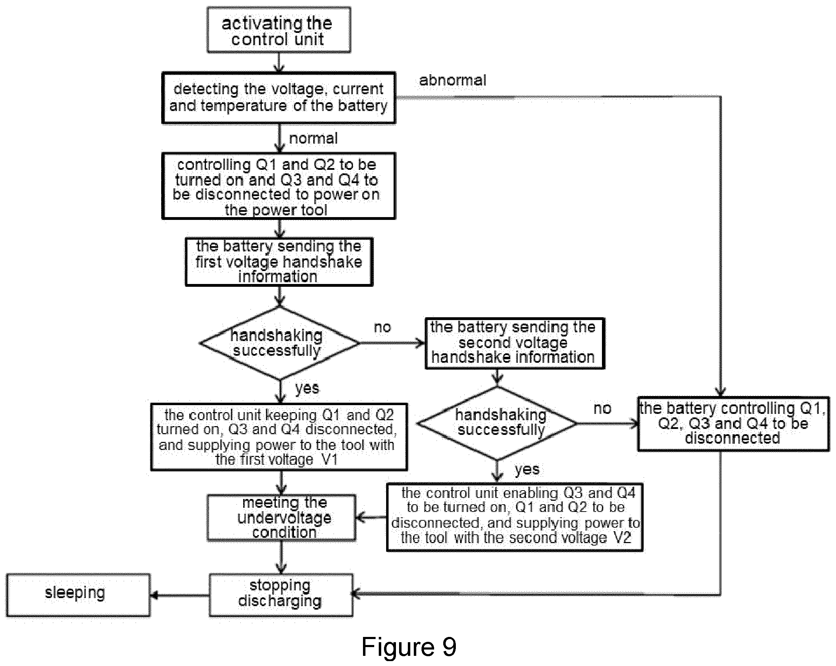

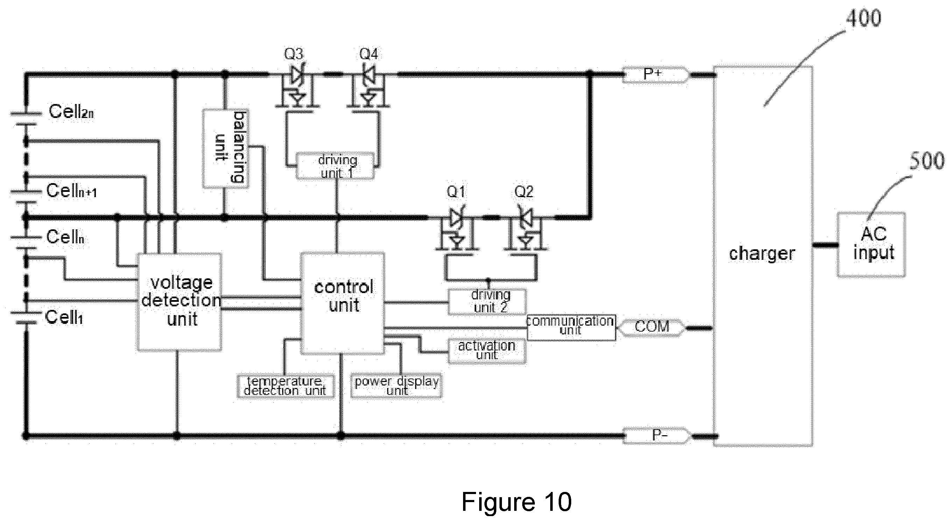

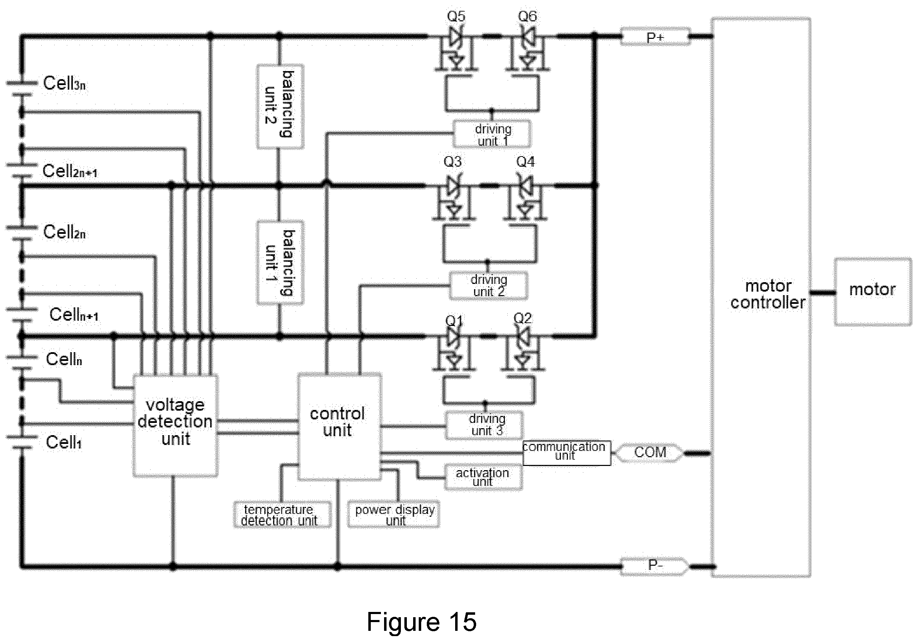

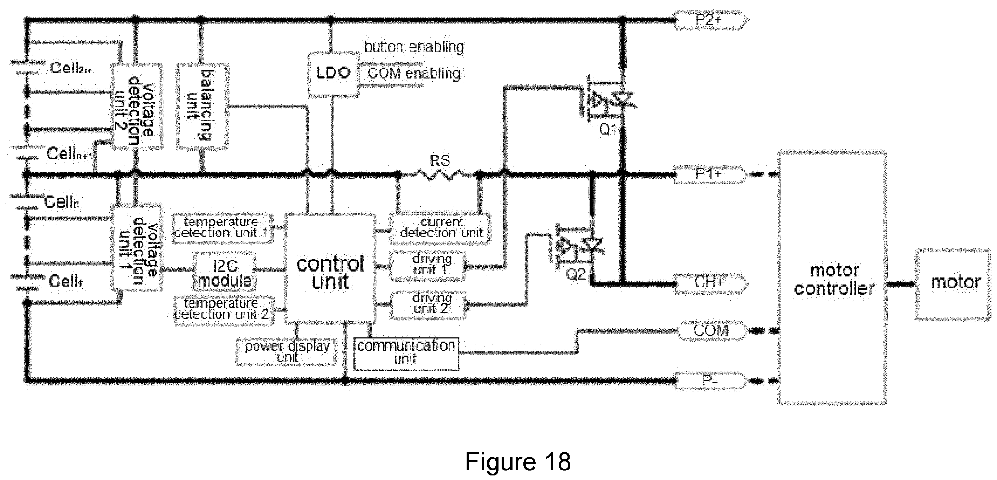

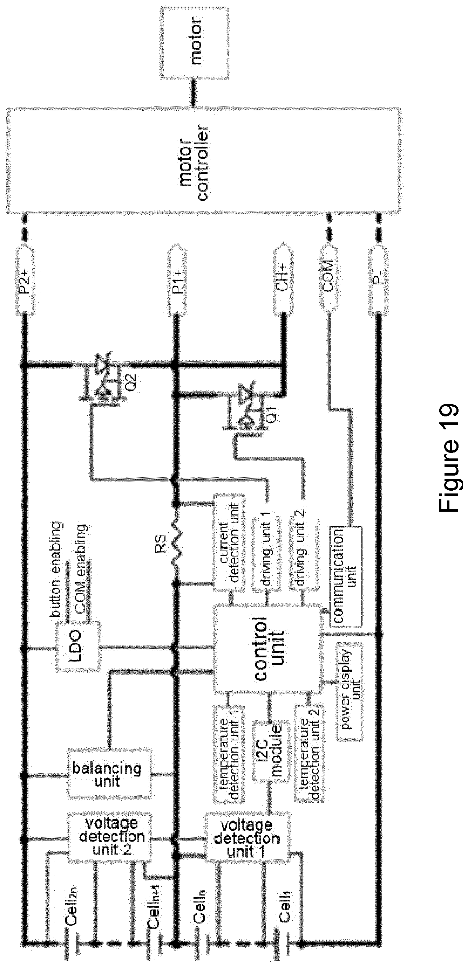

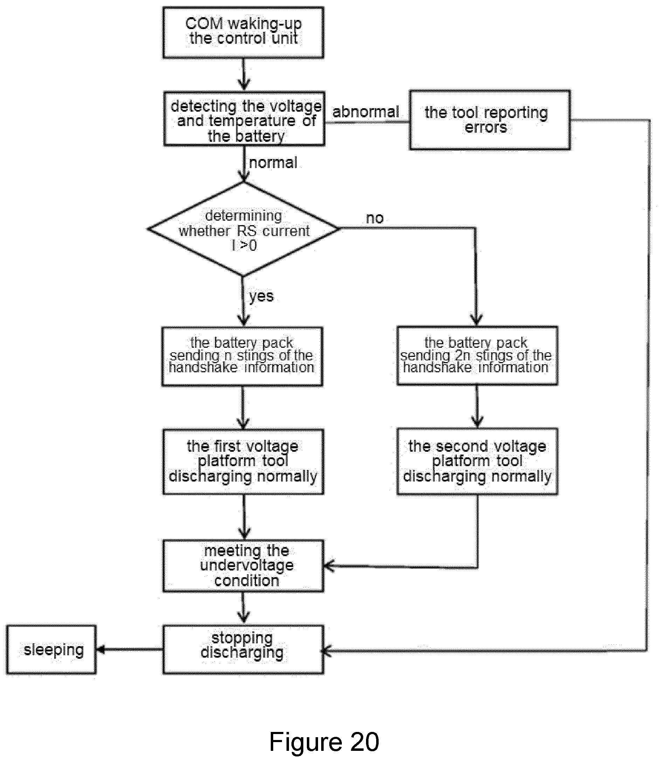

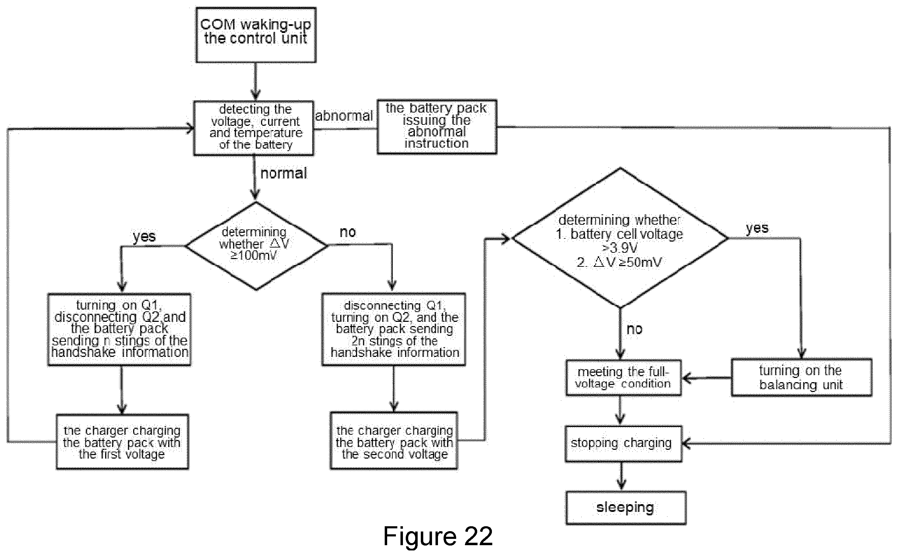

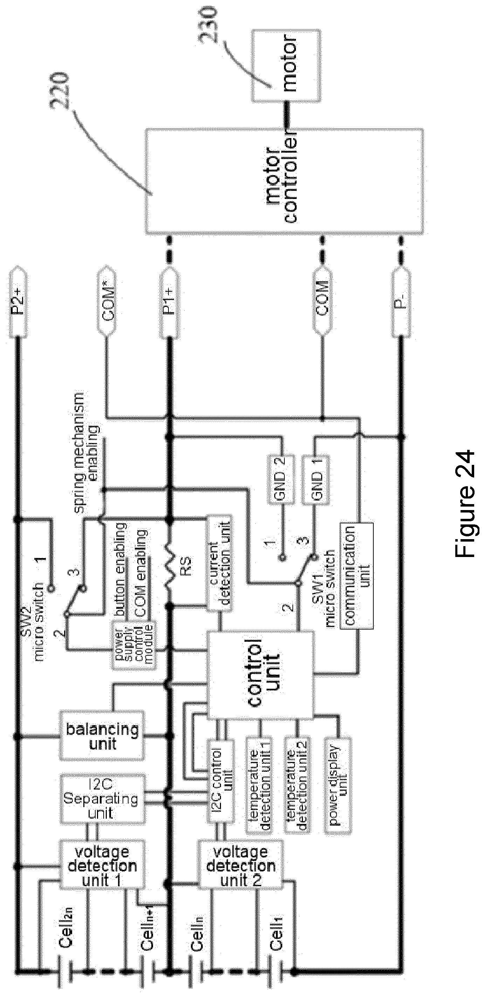

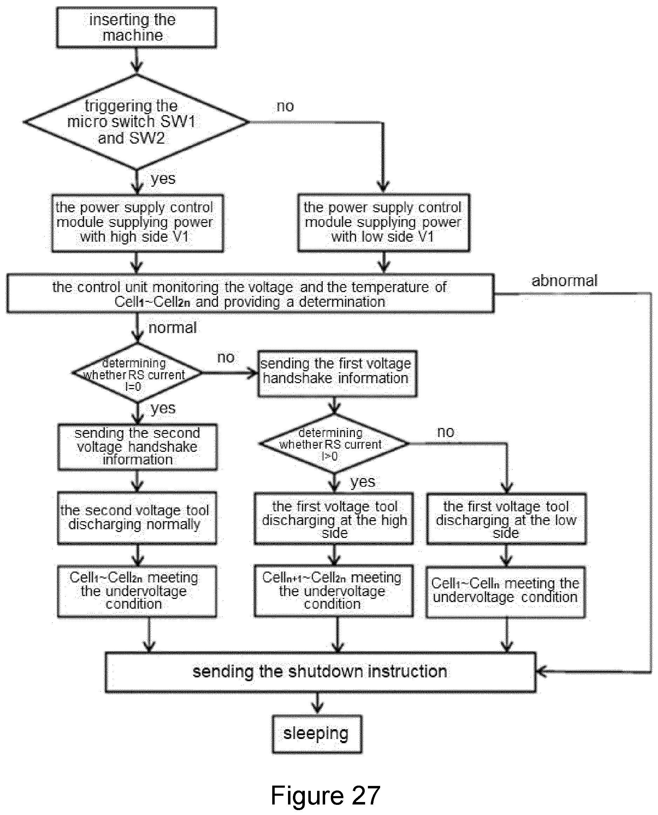

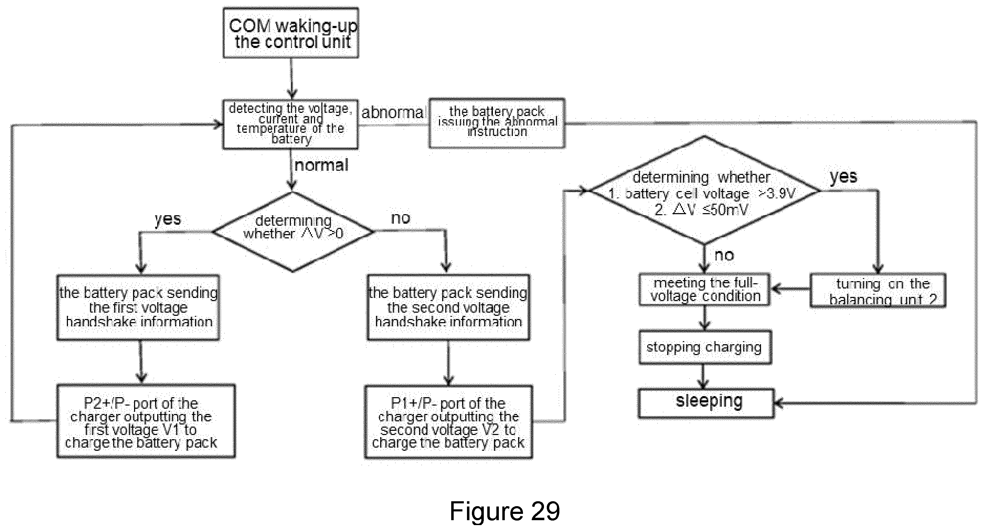

Please refer to FIG. 1 through FIG. 31. The disclosure provides a battery pack 100 and a power tool system including the battery pack 100. The battery pack 100 may output at least two voltages and may be matched with at least two power tools with different working voltages. A multi-voltage output of the battery pack 100 does not require a series-parallel conversion between a plurality of battery cell strings 130. Not only is a circuit structure relatively simple, but it is also easy to achieve a greater capacity expansion by connecting more battery cell strings 130 in parallel. The battery pack 100 and the power tool system including the battery pack 100 will be described below through a plurality of embodiments.

Please refer to FIG. 1 through FIG. 4. One or more embodiments of the disclosure further provides the battery pack 100, which includes a housing 110, at least one battery cell string 130, and a battery interface 120. A structure of the housing 110 in the disclosure is not limited, as long as a housing cavity is formed inside for mounting the power supply string 130. The housing 110 in this embodiment includes a first housing 111 and a second housing 112. The first housing 111 and the second housing 112 are connected to form the housing cavity (not shown) in the housing 110. There are many ways to connect the first housing 111 and the second housing 112, such as a bolt connection, etc. A battery cell bracket (not shown) is mounted in the housing cavity, and the battery cell string 130 is arranged in the housing cavity through the battery cell bracket, so that each battery cell in the battery cell string 130 may be stably mounted in the housing cavity. A number of the battery cell strings 130 is one, two or more. In this embodiment, the battery pack 100 includes only one battery cell string 130, and the battery cell string 130 includes a plurality of the battery cells connected in series. The battery cells have a same specification and a same output voltage. The battery pack 100 may output at least two corresponding voltages by connecting different numbers of the battery cells in the battery cell string 130. The battery pack 100 may output a first voltage V1 through a first number of the battery cells (for example, n battery cells: Cell₁ to Cellₙ), and may also output a second voltage V2 through a second number of the battery cells (for example, 2n battery cells: Cell₁ to Cell₂ₙ). The battery interface 120 may be mechanically and electrically connected with a first power tool having the first voltage, and may also be mechanically and electrically connected with a second power tool 300 having the second voltage. The battery interface 120 includes a guiding rail 123, a buckle 122, an output terminal 121 and a communication terminal (not shown) matched with the first power tool 200 and the second power tool 300 respectively. The guiding rail 123 guides the battery pack 100 to be connected with a mechanical connection structure of the power tool, and the buckle 122 is used to lock the battery pack 100 to the first power tool 200 or the second power tool 300 after the mechanical and electrical connection. A number of the output terminals 121 may be set to one, two, three or more as needed, and may be selected specifically according to a number of output and input voltages. It should be noted that, the guiding rail 123, the buckle 122 and the output terminal 121 on the battery pack 100 may be arranged in any suitable conventional structure, which will not be described in detail.

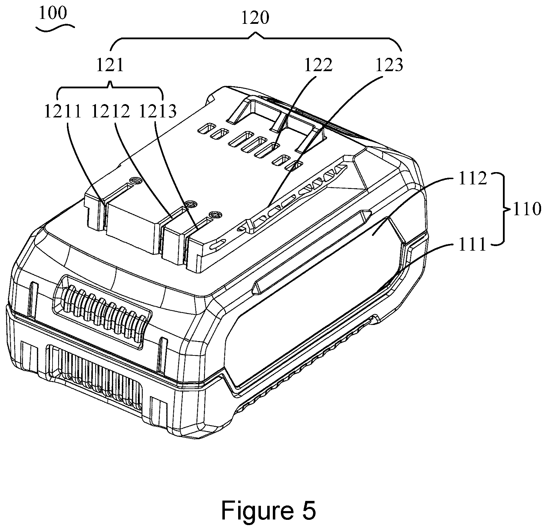

**Please** refer to FIG. 5 through FIG. 6. In an embodiment of the battery pack of the disclosure, it further provides the battery pack 100. The battery pack 100 outputs two different voltages through three terminals. The battery pack 100 includes one battery cell string 130, and the battery cell string 130 includes the plurality of battery cells connected in series in sequence. The battery interface 120 includes the output terminal 121, and the output terminal 121 includes a negative terminal 1211, a first positive terminal 1212 and a second positive terminal 1213. The negative terminal 1211 is electrically connected with a negative electrode of the battery cell string 130 through a negative electrode loop 140, and the first positive terminal 1212 is electrically connected with a first position 131 on the battery cell string 130 through a first current loop 141. There are the first number of the battery cells (e.g., n battery cells: Cell₁ to Cellₙ) connected in series in sequence between the first position 131 and an electrical connection position of the negative electrode loop 140. The second positive terminal 1213 is electrically connected with a second position 132 on the battery cell string 130 through a second current loop 142, and the second number of the battery cells (e.g., 2n battery cells: Cell₁ to Cell₂ₙ) are connected in series in sequence between the second position 132 and the electrically connected position of the negative electrode loop 140. When the first power tool 200 is connected with the battery pack 100, a first tool interface 210 is mechanically and electrically connected with an interface of the battery pack 100, and the first number of the battery cells output the first voltage through the negative terminal 1211 and the first positive terminal 1212. When the second power tool 300 is connected with the battery pack 100, the second tool interface 310 is mechanically and electrically connected with the interface of the battery pack 100, and the second number of the battery cells output the second voltage through the negative terminal 1211 and the second positive terminal 1213. The battery interface 120 further includes at least two positive charging terminals CH1+ and CH2+ that can be electrically connected with a corresponding charger and receive at least two voltage inputs. The at least two positive charging terminals may be independently arranged with the output terminal 121, or may share a terminal with the output terminal 121. In an embodiment of the battery pack 100 of the disclosure, the battery pack 100 may be connected with a charger 400 through the first positive terminal 1212 and the negative terminal 1211, and receive an electrical energy input of the first voltage to charge the first number of the battery cells between the first position 131 and the negative terminal. The battery pack 100 may be connected with the charger 400 through the second positive terminal 1213 and the negative terminal 1211, and receive an electrical energy input of the second voltage to charge the second number of the battery cells between the second position 132 and the negative terminal.

Please refer to FIG. 5 through FIG. 6. The battery pack 100 further includes a control unit 1311, a voltage detection unit 1319, a temperature detection unit 1313, a balancing unit 1312, a first load detection unit 1316, a second load detection unit 1317, a power display unit 1318, a communication unit 1320, an I2C control unit 1315, and a low dropout linear regulator 1314 (LDO, low dropout regulator). The control unit 1311 is powered by an entire battery cell string 130, and corresponding terminals of the control unit 1311 are electrically connected with the second current loop 142 and the negative electrode loop 140 of the battery cell string 130 respectively. The linear regulator is mounted on a connecting wire between the control unit 1311 and the second current loop 142, and provides a stable voltage for the control unit 1311. The voltage detection unit 1319 is electrically connected with each battery cell in the battery cell string 130 to detect a voltage of the battery cell, and transmits a detection result to the control unit 1311 through an I2C module. In an embodiment, the voltage detection unit 1319 is an AFE (analog front end). The temperature detection unit 1313 detects a temperature of each battery cell and transmits the detection result to the control unit 1311. The battery interface 120 further includes a communication port 1215 which is connected with the control unit 1311 through the communication unit 1320 and is used to communicate with the charger 400 and/or the power tool. The power display unit 1318 is electrically connected with the control unit 1311 and is used to display a power of the battery pack 100. Corresponding terminals of the first load detection unit 1316 are electrically connected with the control unit 1311 and the first current loop 141 respectively. Corresponding terminals of the second load detection unit 1317 are electrically connected with the control unit 1311 and the second current loop 142 respectively. The first load detection unit 1316 and the second load detection unit 1317 are used to identify devices externally connected to determine whether a connected device is a first voltage device or a second voltage device.

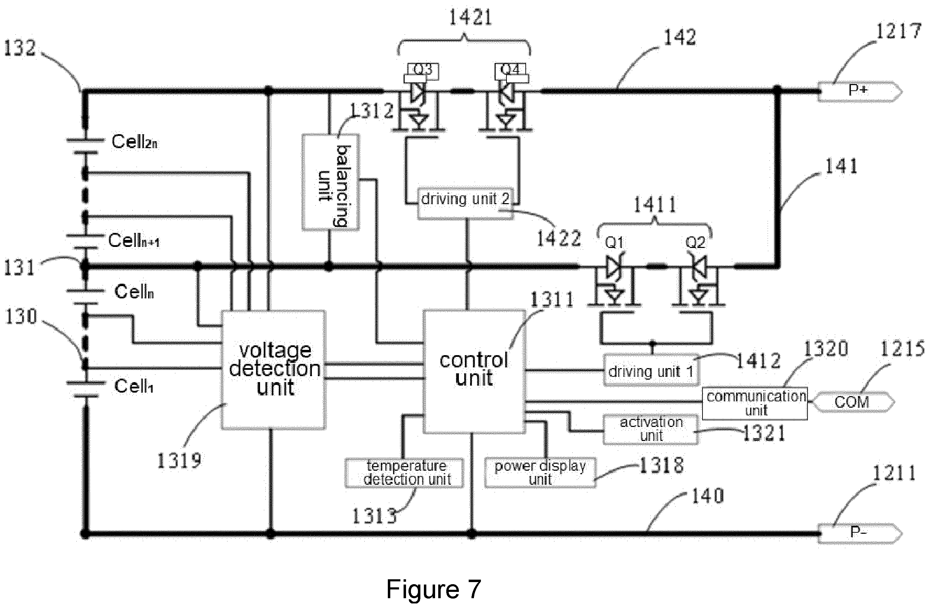

**Please** refer to FIG. 7 through FIG. 11. In an embodiment of the battery pack of the disclosure, it further provides the battery pack 100. The battery pack 100 correspondingly outputs two different voltages respectively under different states through two terminals, and two different voltages share one positive terminal 1217 and one negative terminal 1211. The battery pack 100 includes a switch unit and one battery cell string 130, and the battery cell string 130 includes the plurality of battery cells connected in series in sequence. The battery interface 120 includes the output terminal 121, and the output terminal 121 includes the negative terminal 1211 and the positive terminal 1217. The negative terminal 1211 is electrically connected with the negative electrode of the battery cell string 130 through the negative electrode loop 140, and the positive terminal 1217 is electrically connected with the first position 131 and the second position 132 through the first current loop 141 and the second current loop 142. The first number of the battery cells connected in series (e.g., n battery cells: Cell₁ to Cellₙ) are included between the first position 131 and the negative electrode, and the second number of the battery cells connected in series (e.g., 2n battery cells: Cell₁ to Cell₂ₙ) are included between the second position 132 and the negative electrode. The second number is greater than the first number. The switch unit includes a first switch 1411 and a second switch 1421. The first switch 1411 is electrically arranged on the first current loop 141 and controls an on-off of the first current loop 141. The second switch 1421 is electrically arranged on the second current loop 142 and controls an on-off of the second current loop 142. In this embodiment, the first switch 1411 and the second switch 1421 may be any suitable switch structure capable of realizing the on-off of the first current loop 141 and the second current loop 142, such as a micro switch or a single MOS transistor.

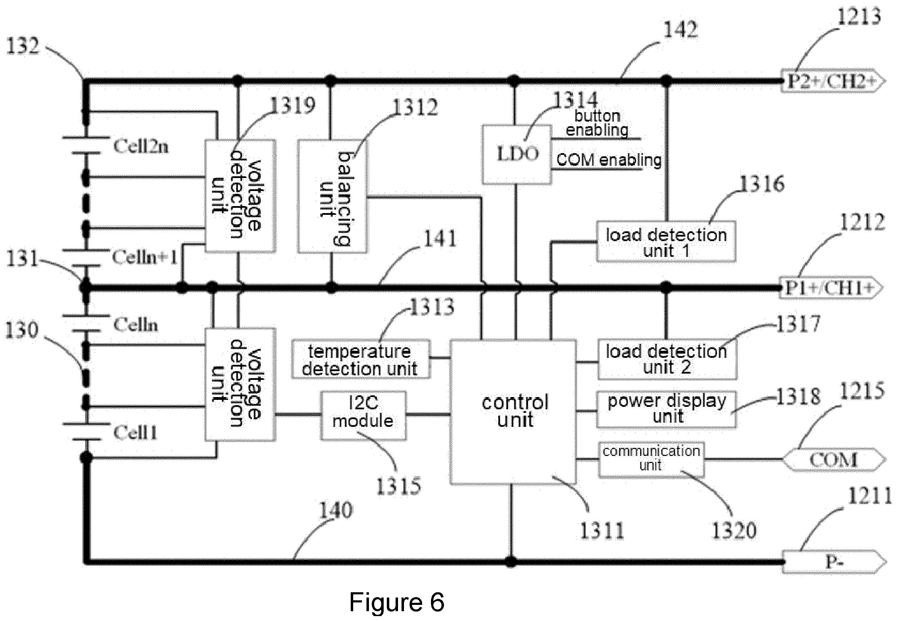

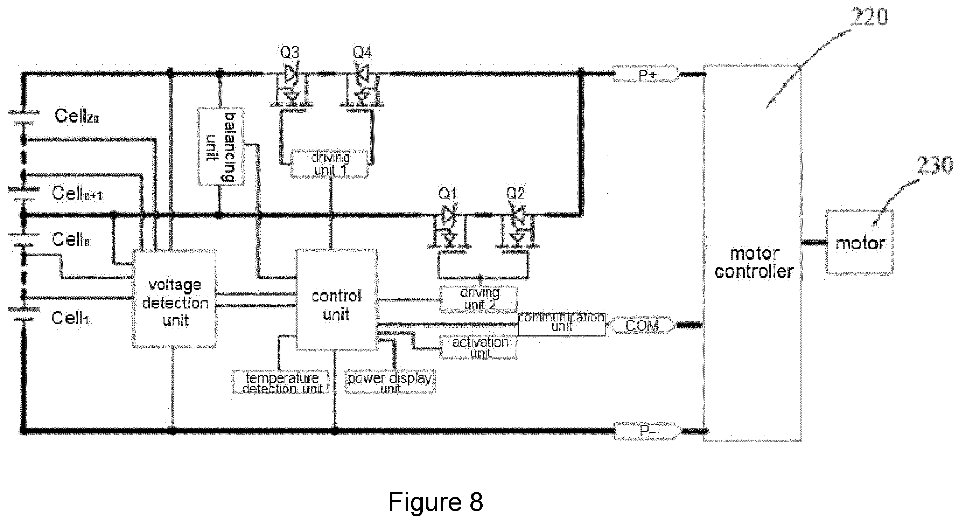

Please refer to FIG. 7 through FIG. 11. In an embodiment of the battery pack of the disclosure, a charging terminal is shared with the output terminal 121. In this embodiment, the battery pack 100 may not only output the first voltage and the second voltage through the positive terminal 1217 and the negative terminal 1211, but also may reversely receive the electrical energy input of the first voltage and the second voltage through the two terminals, the positive terminal 1217 and the negative terminal 1211. The battery pack 100 further includes the switch unit, which includes the first switch 1411 and the second switch 1421. The first switch 1411 is electrically arranged on the first current loop 141, and controls the on-off of the second current loop 142 and a direction in which the current is allowed to pass. The second switch 1421 is electrically arranged on the second current loop 142, and controls the on-off of the second current loop 142 and the direction in which the current is allowed to pass. The first switch 1411 includes a first parasitic NMOS transistor Q1 and a second parasitic NMOS transistor Q2, and the first parasitic NMOS transistor Q1 and the second parasitic NMOS transistor Q2 are reversely connected in series to form a bidirectional switch. The second switch 1421 includes a third parasitic NMOS transistor Q3 and a fourth parasitic NMOS transistor Q4, and the third parasitic NMOS transistor Q3 and the fourth parasitic NMOS transistor Q4 are reversely connected in series to form the bidirectional switch. The switch unit includes a first state, a second state, a third state, and a fourth state. When the switch unit is in the first state, the first parasitic NMOS transistor Q1 and the second parasitic NMOS transistor Q2 are turned on in a direction from the first position 131 to the positive terminal 1217, and the positive terminal 1217 is electrically connected with the first position 131. The third parasitic NMOS transistor Q3 and the fourth parasitic NMOS transistor Q4 are disconnected, the positive terminal 1217 and the negative terminal 1211 output the first voltage, and the first number of the battery cells (for example, n cells: Cell₁ to Cellₙ) provide electrical energy externally. When the switch unit is in the second state, the first parasitic NMOS transistor Q1 and the second parasitic NMOS transistor Q2 are disconnected, the third parasitic NMOS transistor Q3 and the fourth parasitic NMOS transistor Q4 are turned on in a direction from the second position 132 to the positive terminal 1217, and the positive terminal 1217 is electrically connected with the second position 132. The positive terminal 1217 and the negative terminal 1211 output the second voltage, and the second number of the battery cells (for example, 2n cells Cell₁ to Cell₂ₙ) provide electrical energy externally. When the switch unit is in the third state, the first parasitic NMOS transistor Q1 and the second parasitic NMOS transistor Q2 are turned on in a direction from the positive terminal 1217 to the first position 131, the third parasitic NMOS transistor Q3 and the fourth parasitic NMOS transistor Q4 are disconnected, the positive terminal 1217 and the negative terminal 1211 receive the electrical energy input of the first voltage, and the first number of the battery cells (for example, n cells: Cell₁ to Cellₙ) are charged. When the switch unit is in the fourth state, the first parasitic NMOS transistor Q1 and the second parasitic NMOS transistor Q2 are disconnected, the third parasitic NMOS transistor Q3 and the fourth parasitic NMOS transistor Q4 are turned on in a direction from the positive terminal 1217 to the second position 132, the positive terminal 1217 and the negative terminal 1211 receive the electrical energy input of the second voltage, and the second number of the battery cells (for example, 2n battery cells: Cell₁ to Cell₂ₙ) are charged. In an embodiment, to facilitate an automated control, compared with the battery pack 100 in FIG. 6, the battery pack 100 further includes a first driving unit 1412 and a second driving unit 1422. Gates of the first parasitic NMOS transistor Q1 and the second parasitic NMOS transistor Q2 are electrically connected with the first driving unit 1412, and the first driving unit 1412 is electrically connected with the control unit 1311. Gates of the third parasitic NMOS transistor Q3 and the fourth parasitic NMOS transistor Q4 are electrically connected with the second driving unit 1422, and the second driving unit 1422 is electrically connected with the control unit 1311. The control unit 1311 corresponds to conduction states of the first switch 1411 and the second switch 1421 respectively through the first driving unit 1412 and the second driving unit 1422. Please refer to FIG. 8 through FIG. 9. When the power tool is connected, a peripheral detection circuit activates the control unit 1311 through an activation unit, and detects the voltage, current and temperature of the battery through the voltage detection unit 1319 and the temperature detection unit 1313. When any one of detected voltage, current and temperature is abnormal, the control unit 1311 controls all of Q1, Q2, Q3, and Q4 to be disconnected, and a discharging is terminated. The battery pack 100 enters a sleep state after an alarm. If the voltage, current and temperature are normal, the control unit 1311 controls the first driving unit 1412 and the second driving unit 1422, so that Q1 and Q2 are turned on and Q3 and Q4 are disconnected to power on the power tool. After the power tool is powered on, voltage information of the power tool is sent to the battery pack 100 through a COM communication. If the power tool has the first working voltage, first voltage handshake information is sent, and the control unit 1311 keeps Q1 and Q2 turned on, Q3 and Q4 disconnected. The battery pack supplies power to the first power tool 200 with the first voltage V1. If the power tool has the second working voltage, second voltage handshake information is sent, the control unit 1311 enables Q1 and Q2 to be disconnected, and Q3 and Q4 to be turned on, and supplies power to the power tool with the second voltage V2. If an under-voltage condition is met during a process of supplying power with the first voltage or the second voltage, the discharging is terminated and the battery pack 100 goes into sleep.

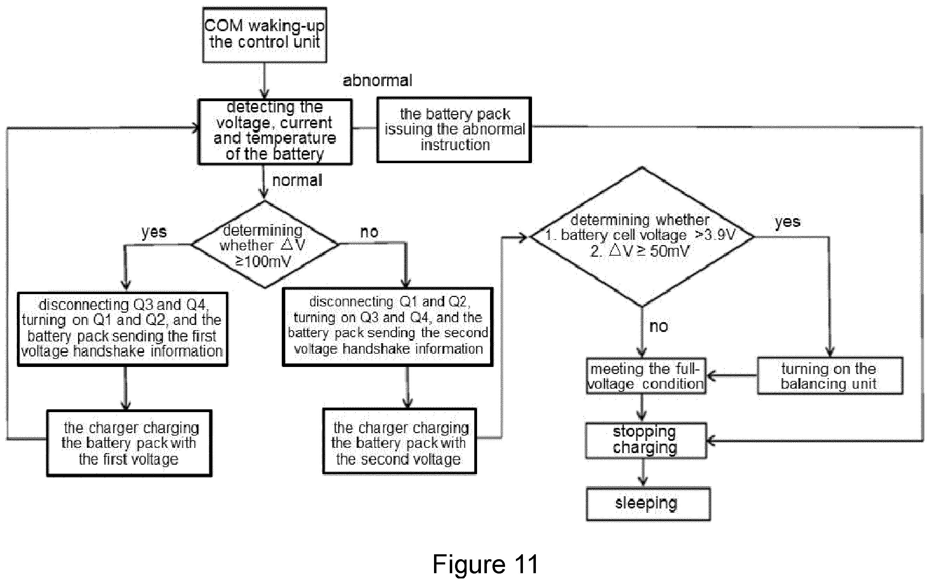

Please refer to FIG. 7, FIG. 10 and FIG. 11. FIG. 11 is a charging logic view of the battery pack according to at least one embodiment of the disclosure. When the external charger 400 is connected, a communication circuit of the charger 400 activates the control unit 1311 through a COM port, and detects the voltage, current and temperature of the battery through the voltage detection unit 1319 and the temperature detection unit 1313. When any one of them is abnormal, the battery pack 100 issues an abnormal instruction, a charging is terminated, and the battery pack 100 enters the sleep state after the alarm. If the voltage, current and temperature are normal, the control unit 1311 detects and determines an inter-group voltage. When the inter-group voltage △V (which means a voltage difference between the second position 132 and the first position 131) is greater than a set voltage threshold (for example greater than or equal to 100mV), the control unit 1311 enables Q1 and Q2 to be turned on, and Q3 and Q4 to be disconnected, and sends the first voltage handshake message to the charger 400. The charger 400 charges the first number of the battery cells (e.g., n battery cells: Cell₁ to Cellₙ) between the first position and the negative electrode of the battery pack 100 with the first voltage V1. When △V is less than the set voltage threshold (for example, less than 100mV), the control unit 1311 and Q2 are disconnected, Q3 and Q4 are turned on, and the second voltage handshake message is sent to the charger 400. The charger 400 charges the second number of the battery cells (for example, 2n battery cells: Cell₁ to Cell₂ₙ) between the second position and the negative electrode of the battery pack 100 with the second voltage V2.

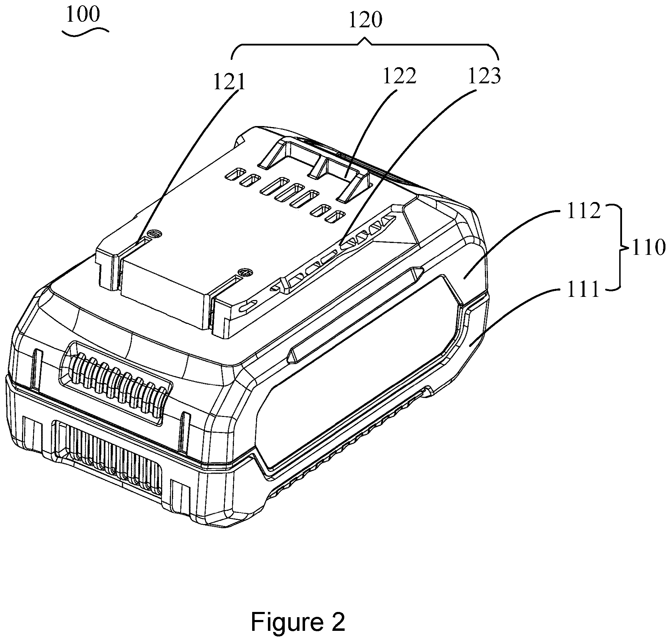

Please refer to FIG. 2, FIG. 12 through FIG. 16. In an embodiment of the battery pack of the disclosure, it further provides the battery pack 100. The battery pack 100 outputs three different voltages through two terminals, and the charging terminal is shared with the output terminal 121. The battery pack 100 may not only output the first voltage, the second voltage and the third voltage through the positive terminal 1217 and the negative terminal 1211, but also may receive the charger to charge the battery cell on the battery cell string with the first voltage, the second voltage and the third voltage through the two terminals. The battery pack 100 includes the switch unit and one battery cell string 130. The battery interface 121 includes the output terminal 121, and the output terminal 121 includes the negative terminal 1211 and the positive terminal 1217. The negative terminal 1211 is electrically connected with the negative electrode of the battery cell string 130, and the positive terminal 1217 is electrically connected with the first position 131 of the battery cell string through the first current loop 141. The positive terminal 1217 is electrically connected with the second position 132 of the battery cell string 130 through the second current loop 142, and the positive terminal 1217 is electrically connected with a third position 133 of the battery cell string 130 through a third current loop 143. The first number of the battery cells (e.g., n battery cells Cell₁ to Cellₙ) connected in series are included between the first position 131 and the negative electrode of the battery cell string 130, the second number of the battery cells (e.g., 2n battery cells Cell₁ to Cell₂ₙ) connected in series are included between the second position 132 and the negative electrode loop, and a third number of the battery cells (e.g., 3n battery cells Cell₁ to Cell₃ₙ) connected in series are included between the third position 133 and the negative electrode loop. The second number is greater than the first number, and the third number is greater than the second number. The switch unit includes the first switch 1411, the second switch 1421 and a third switch 1431. The first switch 1411 is arranged on the first current loop 141 and controls the on-off of the first current loop 141. The second switch 1421 is arranged on the second current loop 142 and controls the on-off of the second current loop 142. The third switch 1431 is arranged on the third current loop 143 and controls an on-off of the third current loop 143. The first switch 1411 includes the first parasitic NMOS transistor Q1 and the second parasitic NMOS transistor Q2. The first parasitic NMOS transistor Q1 and the second parasitic NMOS transistor Q2 are connected in reverse series to form the bidirectional switch. The second switch 1421 includes the third parasitic NMOS transistor Q3 and the fourth parasitic NMOS transistor Q4, and the third parasitic NMOS transistor Q3 and the fourth parasitic NMOS transistor Q4 are connected in reverse series to form the bidirectional switch. The third switch 1431 includes a fifth parasitic NMOS transistor Q5 and a sixth parasitic NMOS transistor Q6, and the fifth parasitic NMOS transistor Q5 and the sixth parasitic NMOS transistor Q6 are connected in reverse series to form the bidirectional switch. The switch unit includes the first state and the second state, the third state, a fourth state, a fifth state and a sixth state. When the switch unit is in the first state, the first parasitic NMOS transistor Q1 and the second parasitic NMOS transistor Q2 are turned on in the direction from the first position 131 to the positive terminal 1217, and the third parasitic NMOS transistor Q3, the fourth parasitic NMOS transistor Q4, the fifth parasitic NMOS transistor Q5, and the sixth parasitic NMOS transistor Q6 are disconnected. The positive terminal is electrically connected with the first position of the battery cell string, and the positive terminal 1217 and the negative terminal 1211 output the first voltage. When the switch unit is in the second state, the first parasitic NMOS transistor Q1, the second parasitic NMOS transistor Q2, the fifth parasitic NMOS transistor Q5, and the sixth parasitic NMOS transistor Q6 are disconnected, and the third parasitic NMOS transistor Q3 and the fourth parasitic NMOS transistor Q4 are turned on in the direction from the second position 132 to the positive terminal 1217. The positive terminal is electrically connected with the second position of the battery cell string, and the positive terminal 1217 and the negative terminal 1211 output the second voltage. When the switch unit is in the third state, the first parasitic NMOS transistor Q1, the second parasitic NMOS transistor Q2, the third parasitic NMOS transistor Q3 and the fourth parasitic NMOS transistor Q4 are disconnected, and the fifth parasitic NMOS transistor Q5 and the sixth parasitic NMOS transistor Q6 are turned on in a direction from the third position 133 to the positive terminal 1217. The positive terminal is electrically connected with the third position of the battery cell string, and the positive terminal 1217 and the negative terminal 1211 output the third voltage. When the switch unit is in the fourth state, the first parasitic NMOS transistor Q1 and the second parasitic NMOS transistor Q2 are turned on in the direction from the positive terminal 1217 to the first position 131, and the third parasitic NMOS transistor Q3, the fourth parasitic NMOS transistor Q4, the fifth parasitic NMOS transistor Q5, and the sixth parasitic NMOS transistor Q6 are disconnected. The positive terminal is electrically connected with the first position of the battery cell string. At this time, the charger may charge the first number of the battery cells (for example, n battery cells: Cell₁ to Cellₙ) between the first position and the negative electrode of the battery pack 100 with the first voltage. When the switch unit is in the fifth state, the first parasitic NMOS transistor Q1, the second parasitic NMOS transistor Q2, the fifth parasitic NMOS transistor Q5, and the sixth parasitic NMOS transistor Q6 are disconnected, and the third parasitic NMOS transistor Q3 and the fourth parasitic NMOS transistor Q4 are turned on in the direction from the positive terminal 1217 to the second position 132. The positive terminal is electrically connected with the second position of the battery cell string. The charger may charge the second number of the battery cells (for example, 2n battery cells: Cell₁ to Cell₂ₙ) between the second position and the negative electrode of the battery pack 100 with the second voltage. When the switch unit is in the sixth state, the first parasitic NMOS transistor Q1, the second parasitic NMOS transistor Q2, the third parasitic NMOS transistor Q3 and the fourth parasitic NMOS transistor Q4 are disconnected, and the fifth parasitic NMOS transistor Q5 and the sixth parasitic NMOS transistor Q6 are turned on in a direction from the positive terminal 1217 to the third position 133. The positive terminal is electrically connected with the third position of the battery cell string, and the charger may charge the third number of the battery cells (for example, 3n battery cells: Cell₁ to Cell₃ₙ) between the third position and the negative electrode of the battery pack 100 with the third voltage.

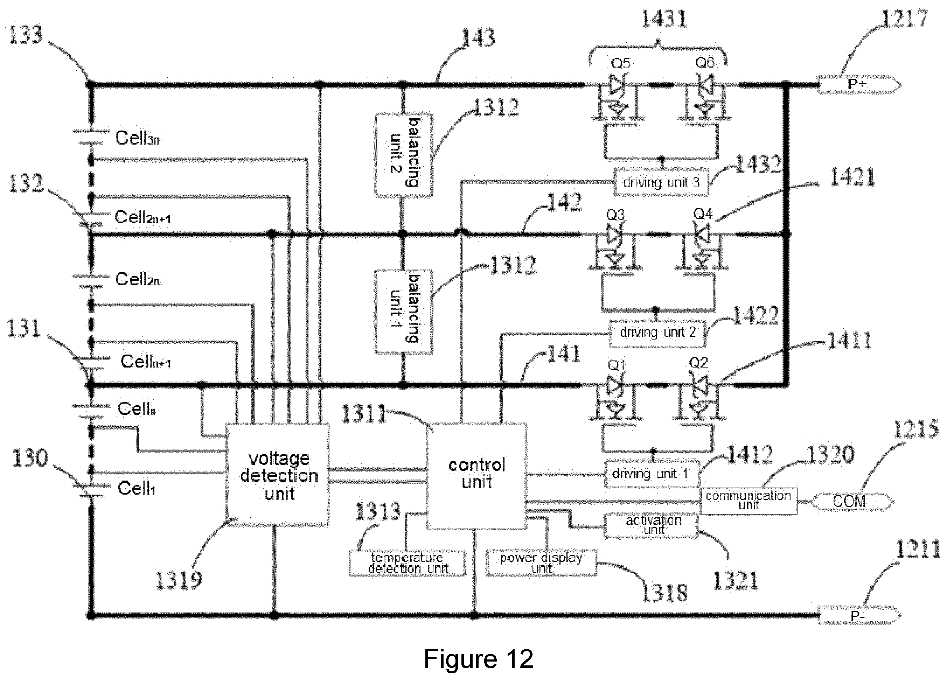

Please refer to FIG. 12 through FIG. 16. To facilitate the automated control, the battery pack 100 further includes the first driving unit 1412, the second driving unit 1422 and a third driving unit 1432. Gates of the first parasitic NMOS transistor Q1 and the second parasitic NMOS transistor Q2 are electrically connected with the first driving unit 1412, and the first driving unit 1412 is electrically connected with the control unit 1311. Gates of the third parasitic NMOS transistor Q3 and the fourth parasitic NMOS transistor Q4 are electrically connected with the second driving unit 1422, and the second driving unit 1422 is electrically connected with the control unit 1311. Gates of the fifth parasitic NMOS transistor Q5 and the sixth parasitic NMOS transistor Q6 are electrically connected with the third driving unit 1431, and the third driving unit 1431 is electrically connected with the control unit 1311.

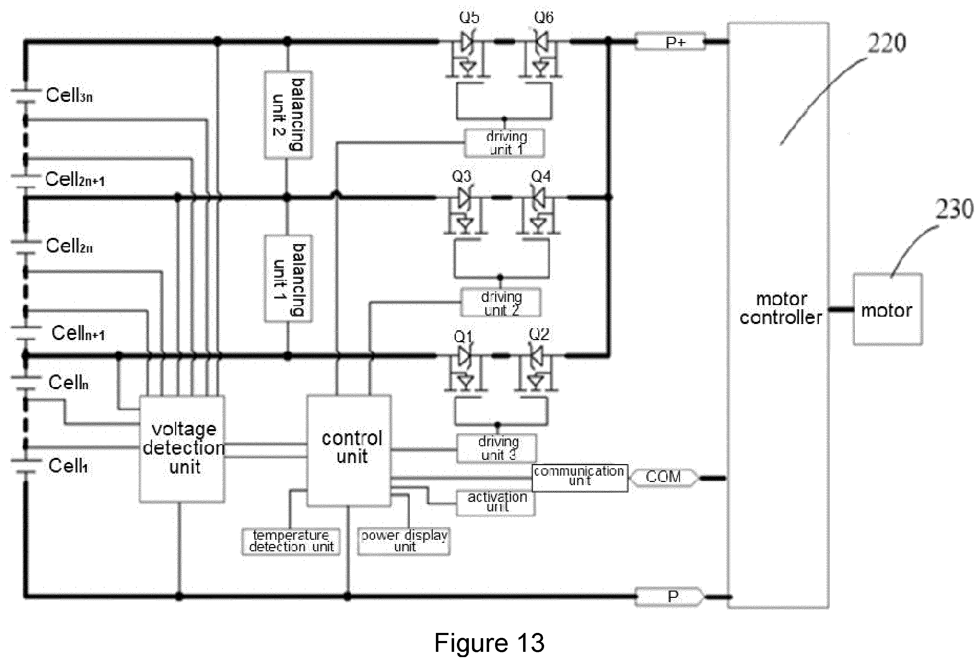

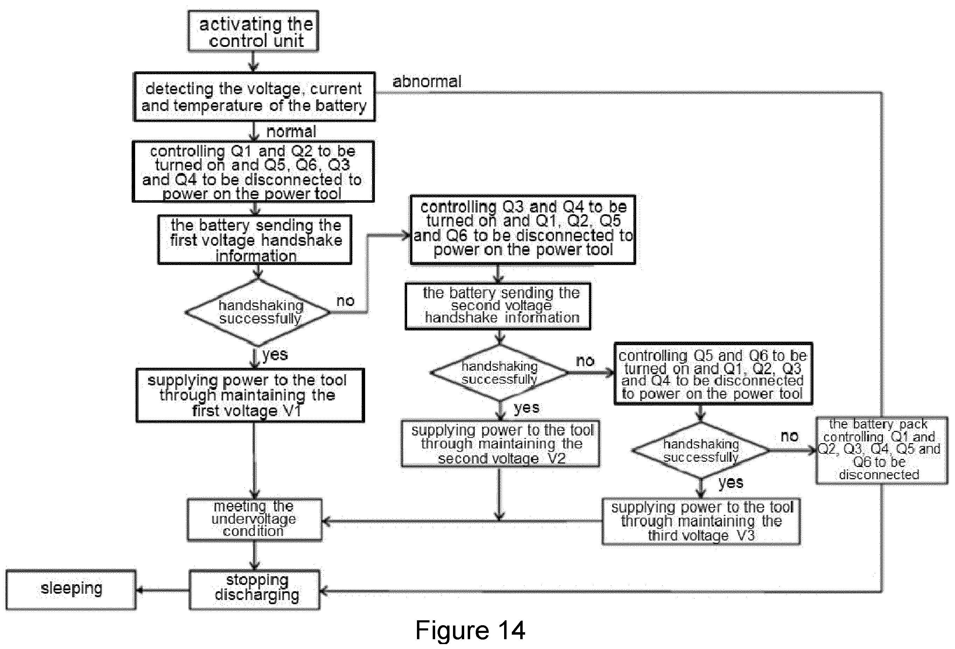

Please refer to FIG. 13 and FIG. 14. FIG. 14 is a discharging logic view of the battery pack 100 in FIG. 12. When the power tool is connected, a peripheral detection circuit activates the control unit 1311 through an activation unit, and detects the voltage, current and temperature of the battery through the voltage detection unit 1319 and the temperature detection unit 1313. When any one of them is abnormal, the control unit 1311 controls all of Q1, Q2, Q3, and Q4 to be disconnected, and a discharging is terminated. The battery pack 100 enters a sleep state after an alarm. If the voltage, current and temperature are normal, in an embodiment of the disclosure, the control unit 1311 controls the first driving unit 1412 to turn on Q1 and Q2. After the power tool is powered on, the control unit communicates with the power tool, and the battery pack obtains working voltage information of the power tool. If the working voltage of the power tool is the first voltage, Q1 and Q2 are kept on, and Q3, Q4, Q5, and Q6 are disconnected. If the working voltage of the power tool is the second voltage, Q3 and Q4 are controlled to be turned on, and Q1, Q2, Q5, and Q6 are disconnected. The power tool is powered with the second voltage V2. If the working voltage of the power tool is the third voltage, Q5 and Q6 are controlled to be turned on, and Q1, Q2 and Q3 and Q4 are turned off. The power tool is powered with the third voltage V3.

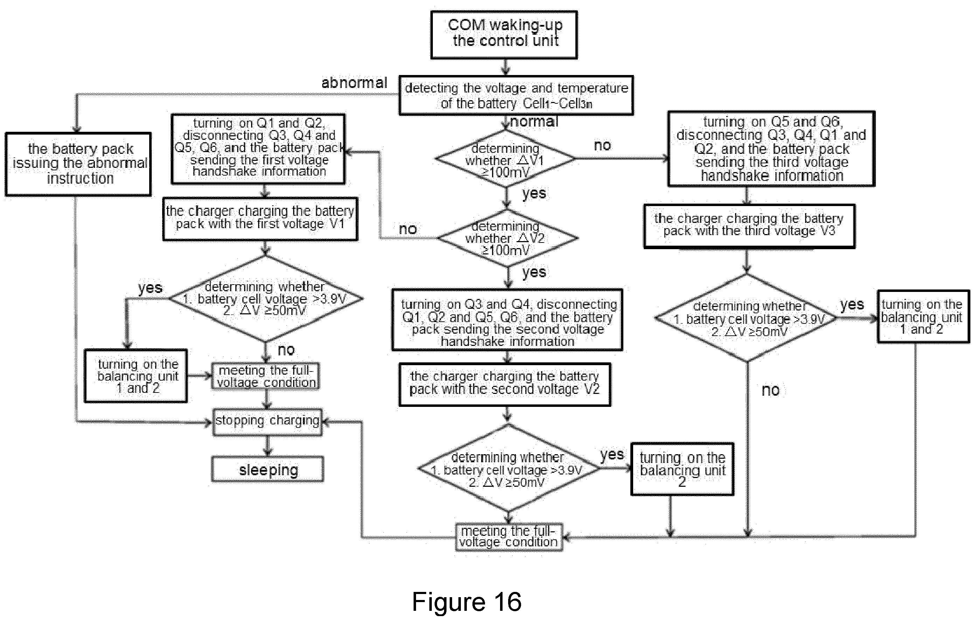

Please refer to FIG. 12, FIG. 15 and FIG. 16. FIG. 16 is a charging logic view of the battery pack 100 in FIG. 12. When the positive terminal and negative terminal of the charger are connected with the positive terminal 1217 and negative terminal 1211 of the battery pack 100, the communication port 1215 pulls up a voltage level to activate the control unit 1311 through the activation unit, and the control unit 1311 detects a voltage and a temperature of the battery cells in Cell₁~Cell₃ₙ, and detects the voltage and the temperature of the battery through the voltage detection unit 1319 and the temperature detection unit 1313. When any one of them is abnormal, the battery pack 100 issues the abnormal instruction, the charging is terminated, and the battery pack 100 enters the sleep state after the alarm. If the voltage and temperature are normal, when △V1 (which means the voltage difference between the first position 131 and the second position 132) is greater than or equal to the set voltage threshold (for example greater than or equal to 100mV), the control unit 1311 enables Q1 and Q2 to be turned on, and Q3, Q4, Q5 and Q6 to be disconnected, and at the same time sends the first voltage handshake message to the charger 400. The charger 400 charges the first number of the battery cells (e.g., n battery cells: Cell₁ to Cellₙ) with the first voltage V1. When △V1 is less than the set voltage threshold (for example, less than 100mV), the control unit 1311 enables Q5 and Q6 to be turned on, and Q3, Q4, Q1 and Q2 to be disconnected, and the battery pack 100 sends third voltage handshake message to the charger 400. The charger 400 charges the third number of the battery cells (for example, 3n battery cells: Cell₁ to Cell₃ₙ) with the third voltage V3. When △V2 (which means a voltage difference between the second position 132 and the third position) is greater than the set voltage threshold (for example greater than or equal to 100mV), the control unit 1311 enables Q3 and Q4 to be turned on, and Q1, Q2, Q5 and Q6 to be disconnected, and at the same time sends the second voltage handshake message to the charger 400. The charger 400 charges 2n battery cells (e.g., 2n battery cells: Cell₁ to Cell₂ₙ) in the battery pack 100 with the second voltage V2. When △V2 is less than the set voltage threshold (for example, less than 100mV), the control unit 1311 enables Q5 and Q6 to be turned on, and Q3, Q4, Q1 and Q2 to be disconnected, and the battery pack 100 sends the third voltage handshake message to the charger 400. The charger 400 charges the battery cells in the battery pack 100 with the third voltage V3.

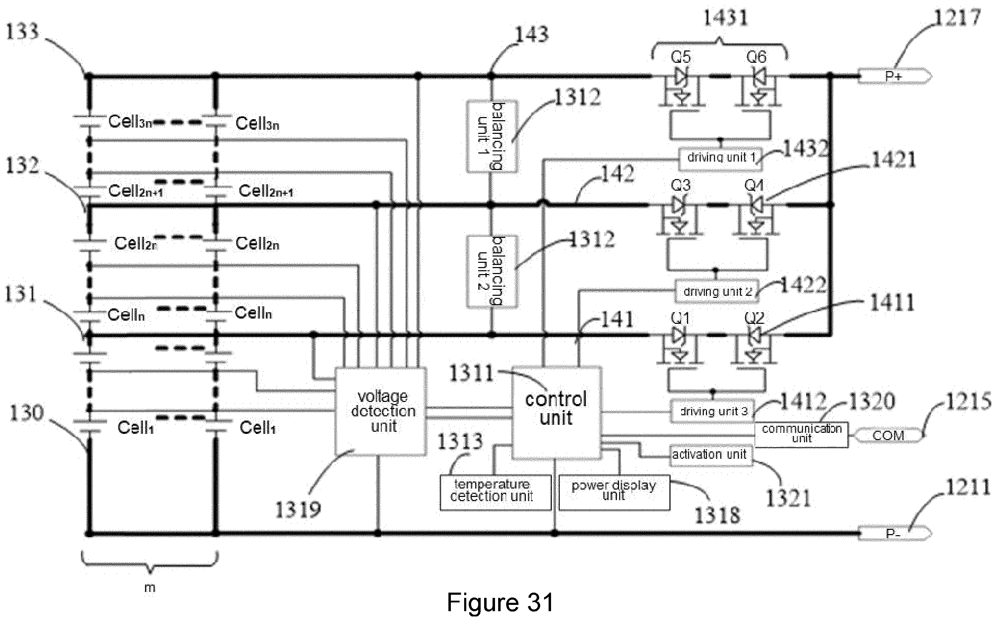

Please refer to FIG. 31. In an embodiment of the battery pack of the disclosure, it further provides the battery pack. The battery pack is different from the battery pack 100 in FIG. 12 in that the battery pack 100 includes a plurality of battery cell strings 130, for example, m battery cell strings 130, where m is a natural number greater than or equal to 2. The m battery cell strings 130 are connected in parallel, the positive terminal 1217 is electrically connected with the first position 131, the second position 132, and the third position 133 on each of the battery cell strings 130 through the first current loop 141, the second current loop 142, and the third current loop 143 respectively. The negative terminal 1211 is electrically connected with the negative electrode of each of the battery cell strings 130 through the negative electrode loop 140. The first number of the battery cells (for example, n battery cells: Cell₁ to Cellₙ) are connected in series between the first position 131 and the negative electrode on each of the battery cell strings 130, the second number of the battery cells (for example, 2n battery cells: Cell₁ to Cell₂ₙ) are connected in series between the second position 132 and the negative electrode on each of the battery cell strings 130, and the third number of the battery cells (for example, 3n battery cells: Cell₁ to Cell₃ₙ) are connected in series between the third position 133 and the negative electrode on each of the battery cell strings 130. The third number is greater than the second number, and the second number is greater than the first number. When the positive terminal 1217 is electrically connected with the first position 131 of the plurality of the battery cell strings, the n battery cells Cell₁ to Cellₙ in the plurality of the battery cell strings provide the first voltage together. When the positive terminal 1217 is electrically connected with the second position 132 of the plurality of the battery cell strings, the 2n battery cells Cell₁ to Cell₂ₙ in the plurality of the battery cell strings provide the second voltage together. When the positive terminal 1217 is electrically connected with the third position 133 of the plurality of the battery cell strings, the 3n battery cells Cell₁ to Cell₃ₙ in the plurality of the battery cell strings provide the third voltage together.

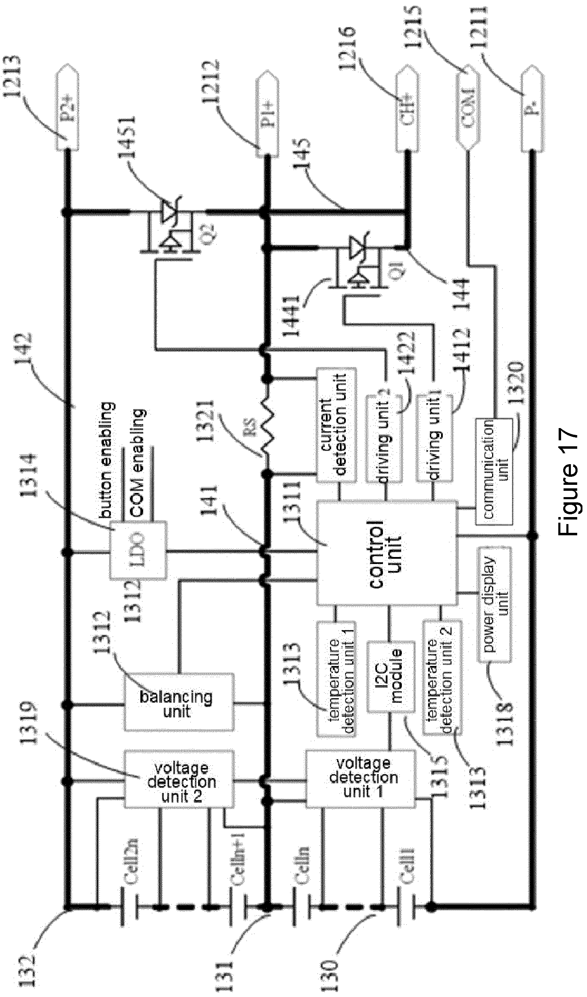

Please refer to FIG. 17 through FIG. 22. FIG. 17 through FIG. 22 shows another embodiment of the battery pack 100. The battery cell string 130 includes the switch unit and the plurality of battery cells connected in series in sequence, and the output terminal includes the first positive terminal 1212, the second positive terminal 1213, the negative terminal 1211, and a charging positive terminal 1216. The negative terminal 1211 is electrically connected with the negative electrode of the battery cell string 130 through the negative electrode loop 140, and the first positive terminal 1212 is electrically connected with the first position 131 on the battery cell string 130 through the first current loop 141. There are the first number of the battery cells (e.g., n battery cells: Cell₁ to Cellₙ) connected in series between the first position 131 and an electrical connection position of the negative electrode loop 140. The second positive terminal 1213 is electrically connected with a second position 132 on the battery cell string 130 through a second current loop 142, and the first number of the battery cells (e.g., 2n battery cells: Cell₁ to Cell₂ₙ) are connected in series in sequence between the second position 132 and the electrically connected position of the negative electrode loop 140. The charging positive terminal 1216 is electrically connected with the first current loop 141 through a first charging loop 144, and the charging positive terminal 1216 is electrically connected with the second current loop 142 through a second charging loop 145. The switch unit includes a first charging switch 1441 and a second charging switch 1451, the first charging switch 1441 is arranged on the first charging loop 144 and is electrically connected with the first driving unit 1412, and the second charging switch 1421 is arranged on the second charging loop 145 and is electrically connected with the second driving unit 1422. The control unit 1311 of the battery pack 100 is electrically connected with the first driving unit 1412 and a second control unit 1311 respectively. The switch unit includes the first state, the second state and the third state. When the switch unit is in the first state, the control unit 1311 drives the first charging switch 1411 and the second charging switch 1451 to be completely disconnected through the first driving unit 1412 and the second driving unit 1422, and the battery pack 100 outputs the first voltage through the first positive terminal 1212 and the negative terminal 1211 or outputs the second voltage through the second positive terminal 1213 and the negative terminal 1211. When the switch unit is in the second state, the control unit 1311 drives the first charging switch 1411 to turn on Q1 through the first driving unit 1412, and drives the second switch 1421 to be turned off through the second driving unit 1422. The charging terminal and the negative terminal 1211 charge the first number of the battery cells connected in series. When the switch unit is in the third state, the control unit 1311 drives the first charging switch 1441 to be turned off through the first driving unit 1412, and drives the second charging switch 1451 to be turned on through the second driving unit 1422, and the charging positive terminal 1216 and the negative terminal 1211 charge the second number of the battery cells connected in series. The battery pack 100 further includes a sampling resistance 1321, which is mounted on the first current loop 141 between the first positive terminal 1212 and the battery cell string 130. The control unit 1311 samples a current state between the first positive terminal 1212 and the battery cell string 130 through the current detection unit, and adjusts an output and shutdown of the first voltage and the second voltage according to the current state.

Please refer to FIG. 1, FIG. 17 through FIG. 20. The communication port 1215 is pulled up to activate the battery pack 100, and the control unit 1311 detects a current I on the sampling resistor 1321. At this time, an absolute value of the current I is greater than 0, and the battery pack 100 is configured as a V1 voltage discharging mode. The communication unit 1320 sends the handshake information in the discharging mode to establish a correct communication connection with the first power tool, and the first power tool starts to work normally. During working, the control unit monitors the voltage of Cell₁~Cellₙ and the temperature of the battery pack 100. When the detected voltage and/or temperature are abnormal, the communication unit sends an abnormal signal to the first power tool, and the first power tool stops working. When the second power tool is connected, the communication port 1215 is pulled up to activate a BMS of the battery pack 100, and the control unit detects the current I on the sampling resistor. At this time, the absolute value of the current I is equal to 0, and the battery pack 100 is configured as a V2 voltage discharging mode. The communication unit sends the handshake information in the discharging mode to establish a correct communication connection with the second power tool, and the second power tool starts to work normally. During working, the control unit monitors the voltage of Cell₁~Cell₂ₙ and the temperature of the battery pack 100. When the detected voltage and/or temperature are abnormal, the communication unit sends the abnormal signal to the second power tool, and the second power tool stops working.

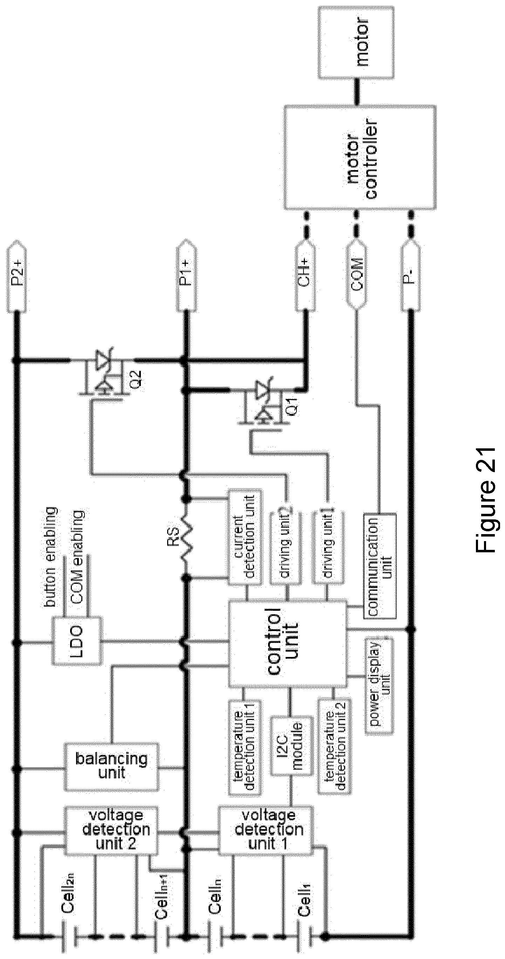

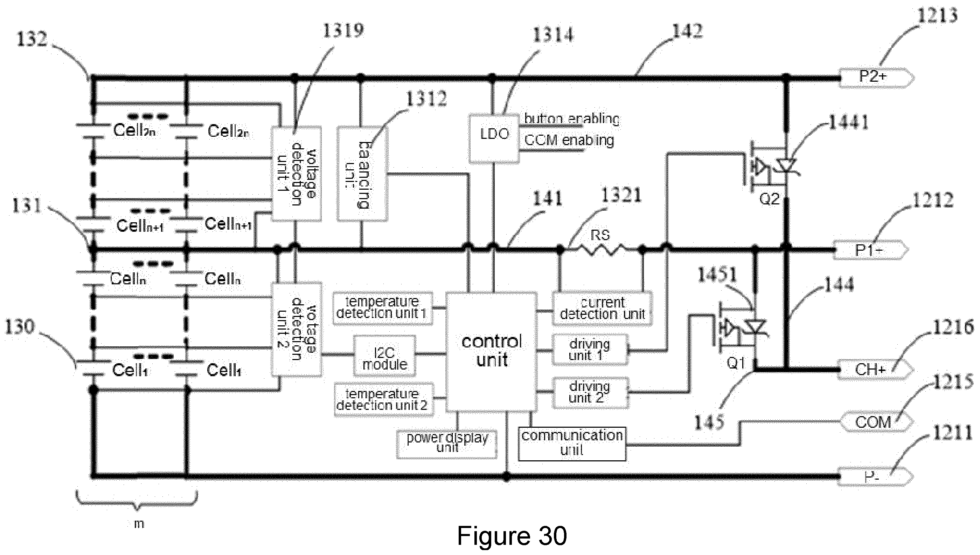

Please refer to FIG. 21 through FIG. 22. The charger may charge the first number of battery cells in the battery cell string with the first voltage through a positive charging port CH+ and a negative charging port P-, and may also charge the second number of battery cells in the battery cell string with the second voltage through the positive charging port CH+ and the negative charging port P-. The charger 400 activates the battery pack 100 through the COM, and the control unit 1311 of the battery pack 100 detects the voltage and temperature of the battery cells inside the battery. When the voltage difference △V between the second position 132 and the first position 131 is greater than or equal to the set threshold (for example, greater than or equal to 100mV), the battery pack 100 sends n strings of the handshake information through the COM terminal, at the same time the control unit 1311 controls Q1 to be turned on and Q2 to be turned off, and the charger 400 charges the battery pack 100 with the first voltage. Until the voltage difference △V between the second position 132 and the first position 131 is less than the set threshold (for example, less than 100mV), the COM of the battery pack 100 sends 2n strings of the handshake information, at the same time the control unit 1311 controls Q2 to be turned on and Q1 to be turned off, and the charger 400 charges the battery pack 100 with the second voltage. The battery pack 100 is in a second voltage charging stage. Please refer to FIG. 30. In another embodiment, the battery pack 100 further includes the plurality of battery cell strings 130, for example m battery cell strings 130, and m is a natural number greater than or equal to 2. The m battery cell strings 130 are connected in parallel. The first positive terminal 1212 is electrically connected with the first position 131 on each of the battery cell strings 130 through the first current loop 141, and the second positive terminal 1213 is electrically connected with the second position on each of the battery cell strings 130 through the second current loop 142. The negative terminal 1211 is electrically connected with the negative electrode of each of the battery cell strings 130 through the negative electrode loop 140. The first number (for example n) of the battery cells are connected in series between the first position 131 and the negative electrode on each of the battery cell strings 130, and the second number (for example 2n) of the battery cells are connected in series between the second position 132 and the negative electrode on each of the battery cell strings 130. The second number is greater than the first number, so that the second voltage is greater than the first voltage. The battery pack 100 may output the first voltage through the first positive terminal 1212 and the negative terminal 1211, and the battery pack 100 may output the second voltage through the second positive terminal 1213 and the negative terminal 1211.

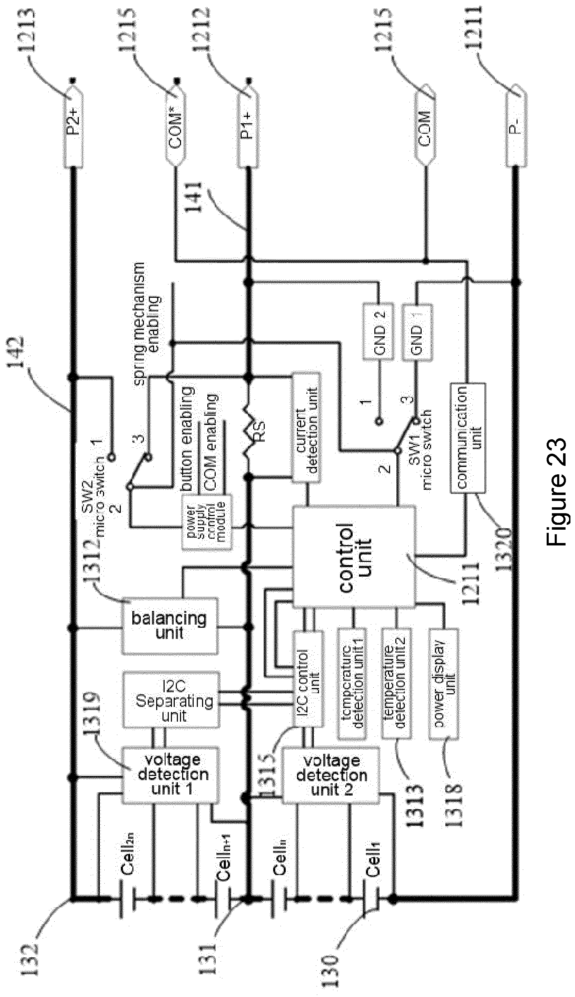

**Please** refer to FIG. 23 through FIG. 29. In another embodiment, it further provides a double-voltage battery pack. This battery pack may alternately output the first voltage. The battery pack 100 includes the switch unit and one battery cell string 130. The battery interface 120 includes the negative terminal 1211, the first positive terminal 1212, the second positive terminal 1213 and two communication ports 1215. The battery pack 100 may not only output the first voltage through the first positive terminal 1212 and the negative terminal 1211, but also output the first voltage through the first positive terminal 1212 and the second positive terminal 1213, and may also output the second voltage through the second positive terminal 1213 and the negative terminal 1211. The battery cell string 130 includes the second number (e.g., 2n) of the battery cells connected in series. The negative terminal 1211 is electrically connected with the negative electrode of the battery cell string 130 through the negative electrode loop 140, and the first positive terminal 1212 is electrically connected with the first position 131 on the battery cell string 130 through the first current loop 141. There are the first number of the battery cells (e.g., n battery cells: Cell₁ to Cellₙ) connected in series between the first position 131 and an electrical connection position of the negative electrode loop 140. The second positive terminal 1213 is electrically connected with a second position 132 on the battery cell string 130 through a second current loop 142, and the first number of the battery cells (e.g., 2n battery cells: Cell₁ to Cell₂ₙ) are connected in series in sequence between the second position 132 and the electrically connected position of the negative electrode loop 140. The switch unit includes the first switch and the second switch. The first switch is a micro switch SW1, and includes a first contact point, a second contact point and a third contact point. The second switch is a micro switch SW2, and also includes a first contact point, a second contact point and a third contact point. A circuit switching is achieved by changing a connection state between different contact points. The switch unit includes the first state and the second state, and may be switched in linkage through a spring mechanism enabling. The battery pack 100 further includes the sampling resistance RS, which is mounted on the first current loop 141 between the first positive terminal 1212 and the battery cell string 130. The control unit 1311 samples the current state between the first positive terminal 1212 and the battery cell string 130 through the current detection unit, and feeds back the current state to the control unit.

Please refer to FIG. 23 through FIG. 27. When the switch unit is in the first state, a second pin and a third pin of SW1 and SW2 are always connected. When the first power tool 200 with the first voltage as the working voltage is connected through the P1+, COM, and P- ports, the second and third pins of the micro switches SW1 and SW2 are connected, a loop power is drawn from P1+, and a loop ground is connected to P- via GND1. A machine activates a system power supply through a COM terminal enabling signal, thereby providing power to the control unit 1311, and selects to detect the voltage of Cell₁~Cellₙ through the I2C control unit 1315, the temperature of Cell₁~Cellₙ through the temperature detection unit 13132 and the current state in the first current loop 141 through the current detection unit. If an RS current I>0, the battery pack 100 sends the first voltage handshake information to the first power tool 200 through COM, and the battery pack 100 enters a low-side first voltage monitoring mode. The first power tool 200 enters a low-side first voltage V1 working mode. When it is detected that the voltage and temperature of Cell₁~Cellₙ are abnormal, the battery pack 100 actively sends a shutdown flag to the first power tool 200, and the first power tool 200 stops working.

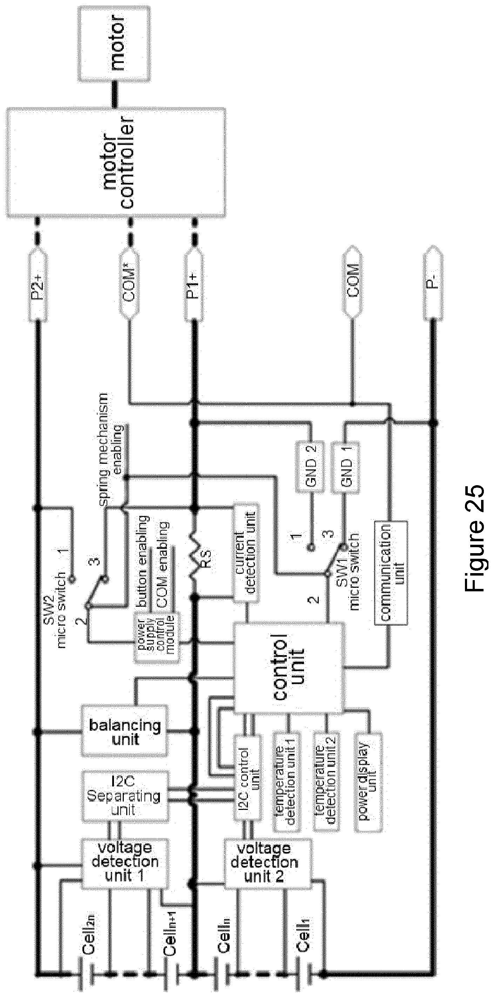

Please refer to FIG. 25. When a motor controller on the first power tool with the first voltage as the working voltage is connected through the P1+, COM*, P2+ port, the switch unit is switched from the first state to the second state by triggering SW1 and SW2. In this process, the micro switches SW1 and SW2 are triggered by the spring mechanical enabling to switch from the second and third pins to the second and first pins. At this time, a power supply control module draws power from P2+, and the control unit 1311 is connected to P1+ through GND2. The machine activates the system power supply through the COM terminal enabling signal, thereby powering on the control unit 1311, and selects to detect the voltage of Cellₙ₊₁~Cell₂ₙ through the I2C control unit 1315, the temperature of Cellₙ₊₁~Cell₂ₙ through the temperature detection unit 1313 and the current state in the first current loop 141 through the current detection unit. If the RS current I<0, the battery pack 100 sends the first voltage handshake information to the power tool through COM, and the battery pack 100 enters a high-side first voltage monitoring mode. The first power tool 200 enters a high-side first voltage V1 working mode. When it is detected that the voltage and temperature of Cellₙ₊₁~Cell₂ₙ are abnormal, the battery pack 100 actively sends a shutdown flag to the first power tool, and the first power tool stops working.

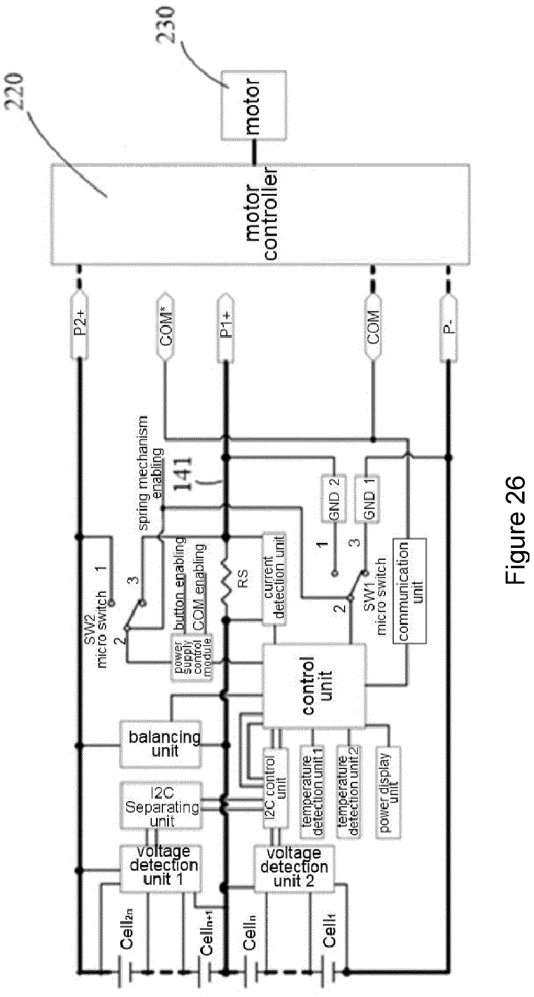

Please refer to FIG. 26. When the second power tool is connected through the P2+/P- port, the power supply control module draws power from P1+. After the power tool is powered on, the battery pack is activated through the COM port, and the control unit 1311 is connected to P- through GND1. The machine activates the system power supply through the COM terminal enabling signal, thereby powering on the control unit 1311. The battery pack enters a second voltage monitoring mode, and selects to detect the voltage of Cell₁~Cell₂ₙ through the I2C control unit, the temperature of Cell₁~Cell₂ₙ through a temperature detection unit 1 and a temperature detection unit 2, and the current state in the first current loop 141 through the current detection unit. If the RS current I=0 mA, the battery pack 100 enters a second voltage working mode. The battery pack 100 sends the second voltage handshake information to the second power tool 300 through the COM port. When it is detected that the voltage and temperature are abnormal, the battery pack 100 actively sends the shutdown flag to the second power tool 300, and the second power tool 300 stops working.

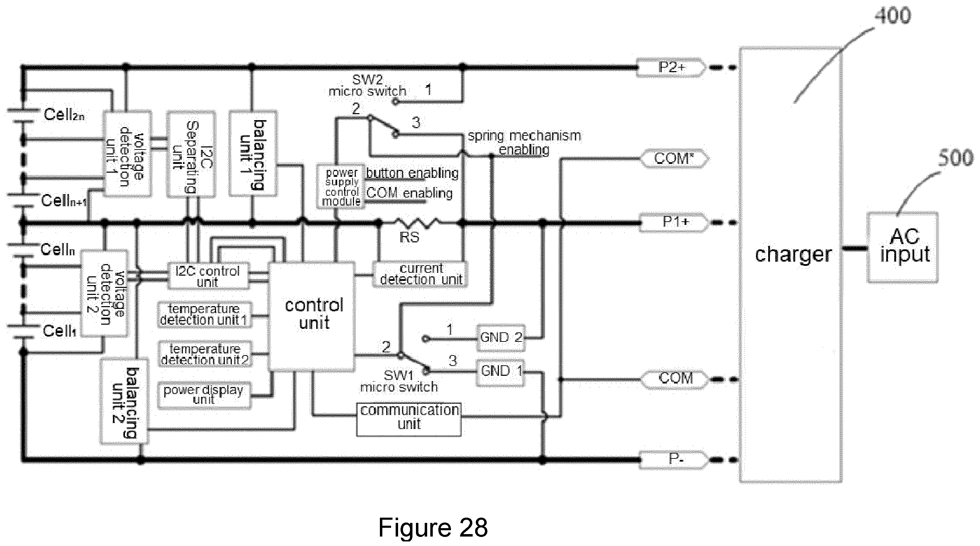

FIG. 28 through FIG. 29 is a charging schematic view of the battery pack in FIG. 23. The charger 400 activates the battery pack 100 through the COM port. The control unit of the battery pack 100 detects the voltage and temperature of the battery cells inside the battery, and determines a difference △V between a total voltage of the n strings of cells on a high side (which means Cellₙ₊₁~Cell₂ₙ) and a total voltage of the n strings of cells on a low side (which means Cell₁~Cellₙ). When ΔV>0, the battery pack sends the first voltage handshake message through the COM port, and the charger 400 outputs the first voltage to charge the battery pack through the P1+ and P- ports until △V≤0. The battery pack 100 then sends the second voltage handshake message through COM, and the charger 400 outputs the second voltage to charge the battery pack through the P2+ and P- ports until charging is completed. If △V≤0 when the charger 400 is connected, the battery pack 100 sends the second voltage handshake message through COM, and the charger 400 outputs the second voltage to charge the battery pack through the P2+ and P- ports.

**In** the above embodiments, at least two different voltages are output mainly by connecting different numbers of battery cells with the same voltage. The following embodiments will be described by examples from different battery cell units.

Please refer to FIG. 1 through FIG. 4. In an embodiment of the battery pack 100 of the disclosure, the battery pack 100 includes the housing 110, at least one battery cell string 130, and the battery interface 120. The housing 110 includes the housing cavity, and the battery cell string 130 is arranged in the housing cavity. The battery interface 120 is arranged on the housing 110 and is used to be connected with the power tools with different working voltages. Different from the above embodiment, the battery cell string 130 in this embodiment includes a first battery cell unit and a second battery cell unit. The first battery cell unit includes the first number (for example n) of the battery cells connected in series, and the second battery cell unit includes the second number (for example a) of the battery cells connected in series. The battery interface 120 includes the output terminal 121, and the output terminal 121 includes the negative terminal 1211, the first positive terminal 1212 and the second positive terminal 1213. The first battery cell unit outputs the first voltage through the negative terminal 1211 and the first positive terminal 1212, and the second battery cell unit outputs the second voltage through the negative terminal 1211 and the second positive terminal 1213. It should be noted that in this embodiment, the first battery cell unit and the second battery cell unit may be independent units that output voltages independently, but in this embodiment, the second battery cell unit includes the first battery cell unit, the first battery cell unit includes 1st to nth battery cells, and the second battery cell unit may include 1st to 2nth battery cells.

Please refer to FIG. 1 through FIG. 4. In another embodiment of the battery pack of the disclosure, the battery pack 100 includes the housing 110, at least one battery cell string 130, and the battery interface 120. The housing 110 includes the housing cavity, and the battery cell string 130 is arranged in the housing cavity. The battery interface 120 is arranged on the housing 110 and is used to be connected with the power tools with different working voltages. Different from the above embodiment, the battery cell string 130 in this embodiment includes a first battery cell unit, a second battery cell unit and a third battery cell unit. The first battery cell unit includes the first number (for example n) of the battery cells connected in series, the second battery cell unit includes the second number (for example a) of the battery cells connected in series, and the third battery cell unit includes the third number (for example b) of the battery cells connected in series. The battery interface 120 includes the output terminal 121, and the output terminal 121 includes the negative terminal 1211, the first positive terminal 1212, the second positive terminal 1213 and the third positive terminal 1214. The first battery cell unit outputs the first voltage through the negative terminal 1211 and the first positive terminal 1212, the second battery cell unit outputs the second voltage through the negative terminal 1211 and the second positive terminal 1213, and the third battery cell unit outputs the third voltage through the negative terminal 1211 and the third positive terminal 1214. It should be noted that in this embodiment, the second battery cell unit may include the first battery cell unit, and the third battery cell unit may include the first battery cell unit and/or the second battery cell unit. For example, the first battery cell unit includes the 1st to nth battery cells, the second battery cell unit may include the 1st to 2nth battery cells, and the third battery cell unit may include 1st to 3nth battery cells.

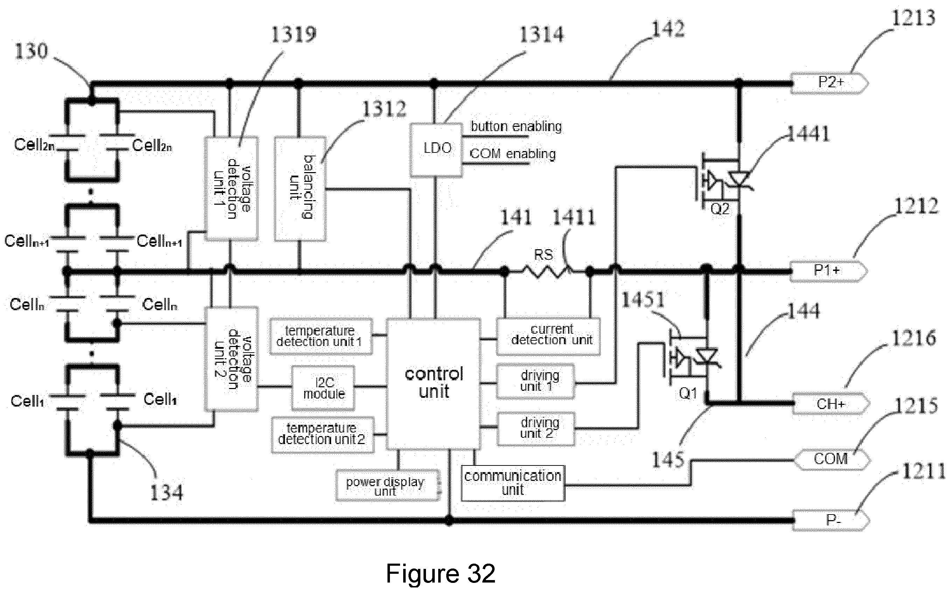

**Please** refer to FIG. 32. In FIG. 32, in another embodiment of the disclosure, and the battery pack is different from the battery pack in FIG. 17 in that the battery cell string 130 includes the first battery group and the second battery group. The first battery group includes the first number (for example n) of battery cell units, the second battery group includes the second number (for example 2n) of the battery cell units. The battery cell unit includes two or the plurality of battery cells connected in parallel, and a number of the battery cell units in the second battery group is greater than a number of battery units in the first battery group. The first battery pack outputs the first voltage through the output terminal 121, and the second battery pack outputs the second voltage through the output terminal 121. This arrangement method may expand a capacity of the battery pack 100 by connecting the plurality of the battery cells in parallel in each battery group.

**Please** refer to FIG. 30. One or more embodiments of the disclosure further provide another battery pack, and the battery pack is different from the battery pack in FIG. 17 in that the battery pack includes a plurality of the battery cell strings 130. The plurality of battery cell strings 130 are arranged in the housing cavity and are arranged in parallel. The negative terminal 1211 is electrically connected with the negative electrodes of the plurality of the battery cell strings 130, and the first positive terminal 1212 is electrically connected with a first equipotential position on each of the battery cell strings 130. The battery pack 100 outputs the first voltage through the first positive terminal 1212 and the negative terminal 1211. The second positive terminal 1213 is electrically connected with a second equipotential position on each of the battery cell strings 130, and the battery pack 100 outputs the second voltage through the second positive terminal 1213 and the negative terminal 1211. In this embodiment, as long as a potential at a connection between the first current loop 141 and the plurality of the battery cell strings 130 is equal, and a potential at a connection between the second current loop 142 and the plurality of the battery cell strings 130 is equal, the number and the output voltage of battery cells that output the first voltage, and the number and the output voltage of battery cells that output the second voltage are not limited.

Another embodiment of the disclosure further provides the double-voltage battery pack, and the battery pack is different from the battery pack in FIG. 7 in that the battery pack 100 includes the plurality of the battery cell strings 130. When in the first state, the positive terminal 1217 is electrically connected with the first equipotential position on each of the battery cell strings 130, and the battery pack 100 outputs the first voltage through the positive terminal 1217 and the negative terminal 1211. In the second state, the positive terminal 1217 is electrically connected with the second equipotential position on each of the battery cell strings 130, and the battery pack 100 outputs the second voltage through the positive terminal 1217 and the negative terminal 1211. In this embodiment, as long as the potential at the connection between the first current loop 141 and the plurality of the battery cell strings 130 is equal, and the potential at the connection between the second current loop 142 and the plurality of the battery cell strings 130 is equal, the number and the output voltage of battery cells that output the first voltage, and the number and the output voltage of battery cells that output the second voltage are not limited.

Please refer to FIG. 31. An embodiment of the disclosure further provide a triple-voltage battery pack, and the battery pack is different from the battery pack in FIG. 12 in that the battery pack includes the plurality of the battery cell strings 130. When in the first state, the positive terminal 1217 is electrically connected with the first equipotential position on each of the battery cell strings 130. The battery pack 100 outputs the first voltage through the positive terminal 1217 and the negative terminal 1211. When in the second state, the positive terminal 1217 is electrically connected with the second equipotential position on each of the battery cell strings 130, and the battery pack 100 outputs the second voltage through the positive terminal 1217 and the negative terminal 1211. When in the third state, the positive terminal 1217 is electrically connected with a third equipotential position on each of the battery cell strings 130. The battery pack 100 outputs the third voltage through the positive terminal 1217 and the negative terminal 1211. In this embodiment, as long as the potential at the connection between the first current loop 141 and the plurality of the battery cell strings 130 is equal, the potential at the connection between the second current loop 142 and the plurality of the battery cell strings 130 is equal, and a potential at a connection between the third current loop 143 and the plurality of the battery cell strings 130 is equal, the number and the output voltage of battery cells that output the first voltage, the number and the output voltage of battery cells that output the second voltage, and the number of battery cells that output the third voltage and the output voltage are not limited.

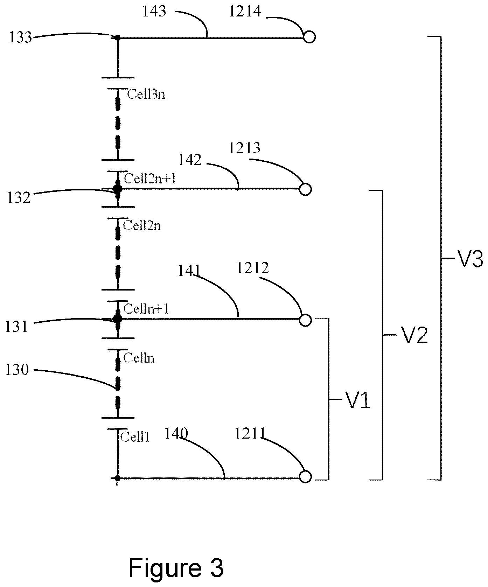

Please refer to FIG. 3. One or more embodiments of the disclosure further provide the triple-voltage battery pack. The battery pack 100 outputs three different voltages through four terminals, namely, the first voltage, the second voltage, and the third voltage. The battery pack 100 includes one battery cell string 130, and the battery cell string 130 includes the plurality of battery cells connected in series in sequence. The battery interface 120 includes the negative terminal 1211, the first positive terminal 1212, the second positive terminal 1213 and the third positive terminal 1214. The negative terminal 1211 is electrically connected with the negative electrode of the battery cell string 130 through the negative electrode loop 140, and the first positive terminal 1212 is electrically connected with the first position 131 on the battery cell string 130 through the first current loop 141. There are the first number of the battery cells (e.g., n battery cells: Cell₁ to Cellₙ) connected in series in sequence between the first position 131 and the negative electrode of the battery cell string. The first number of the battery cells output the first voltage through the negative terminal 1211 and the first positive terminal 1212. The second positive terminal 1213 is electrically connected with the second position 132 on the battery cell string 130 through the second current loop 142, and the second number of the battery cells (e.g., 2n battery cells: Cell₁ to Cell₂ₙ) are connected in series in sequence between the second position 132 and the negative electrode of the battery cell string. The second number of the battery cells output the second voltage through the negative terminal 1211 and the second positive terminal 1213. The third positive terminal 1214 is electrically connected with the third position 133 on the battery cell string 130 through the third current loop. The third number of the battery cells (for example, 3n battery cells: Cell₁ to Cell₃ₙ) are connected in series in sequence between the third position 133 and the negative electrode of the battery cell string. The third number of the battery cells output the third voltage through the negative terminal 1211 and the third positive terminal 1214.

**It** should be noted that, in the above embodiments, the examples of the first number n, the second number 2n and the third number 3n do not limit a corresponding multiple relationship among the third number, the second number and the first number. For example, in some other embodiments, when the first number is n, the second number may correspond to n+t, and the third number can be n+t+S, where the above n, t, and S may all be any natural numbers.

Please refer to FIG. 1. One or more embodiments of the disclosure further provide the power tool system. The power tool system includes the battery pack 100, the first power tool 200 and the second power tool 300. The battery pack 100 may be the battery pack 100 capable of outputting at least two voltages in any of the above embodiments. In this embodiment, the battery pack 100 has a first voltage output state and a second voltage output state, and includes the housing 110, the battery interface 120 and at least one battery cell string 130. The battery cell string 130 includes the first battery cell unit and the second battery cell unit, the first battery cell unit includes the first number of the first battery cells connected in series, and the second battery cell unit includes the second number of second battery cells connected in series. The first number is less than the second number. The first power tool 200 has the first voltage, the second power tool 300 has the second voltage, and the first voltage is less than the second voltage. The first power tool 200 and the second power tool 300 are both provided with a tool interface that matches and connects with the battery interface 200. When the battery pack 100 is in the first voltage output state, the first number of the battery cells in the battery cell string 130 output the first voltage to the power tool, and when the battery pack 100 is in the second voltage output state, the second number of the battery cells in the battery cell string 130 output the second voltage to the power tool. In another embodiment, when the battery pack is matched with the first power tool, the battery pack outputs the first voltage to the first power tool. When the battery pack is matched with the second power tool, in the power tool system, the battery pack 100 further includes the control unit 1311 and the communication port 1215. The communication port 1215 is electrically connected with the control unit 1311. The first power tool 200 further includes a first communication port matching the communication port 1215, the second power tool 300 further includes a second communication port matching the communication port 1215. When the battery pack 100 is connected with the first power tool 200, the communication port 1215 is electrically connected with the first communication port, the control unit 1311 controls the battery pack 100 to output the first voltage. When the battery pack 100 is connected with the second power tool 300, the communication port 1215 is electrically connected with the second communication port, and the control unit 1311 controls the battery pack 100 to output the second voltage.

Please refer to FIG. 1. One or more embodiments of the disclosure further provide the power tool system, which includes the first power tool 200, the second power tool 300 and the battery pack 100 described in any one of the above embodiments. In an embodiment of the battery pack of the disclosure, the battery pack 100 includes the housing 110, the battery interface 120 and at least one battery cell string 130. The battery cell string 130 includes the plurality of battery cells connected in series. The first power tool 200 has the first working voltage, and is provided with the first tool interface 210 matched and connected with the battery interface 120. The second power tool 300 has the second working voltage, and is provided with a second tool interface 310 matched and connected with the battery interface 120. When the first power tool 200 is connected with the battery pack 100, the first tool interface 210 is connected with the battery pack interface 120, the first number of the battery cells in the battery cell string 130 output the first voltage to the first power tool 200. When the second power tool 300 is connected with the battery pack 100, the second tool interface 310 is connected with the battery pack interface 120, and the second number of the battery cells in the battery cell string 130 output the second voltage to the second power tool 300.

The battery pack of the disclosure outputs at least two voltages through connecting different numbers of the battery cells in the battery cell string. In a process of outputting at least two voltages, there is no need to connect the battery cell strings in parallel, which not only simplifies the connection circuit of the battery pack, but also provides the new idea for the multi-voltage output of the battery pack.

Considering that conventional power tool systems mostly use different battery packs to provide power support for one or more power tools with different working voltages within the power tool system. And, even if there are double-voltage battery packs that may match different power tools to output different working voltages, the double-voltage battery packs cannot be interchangeably connected with conventional single-voltage battery packs to conventional power tools, so that conventional power tools that match single-voltage battery packs cannot be used with conventional double-voltage battery pack. Therefore, it is necessary to design an power tool system so that in the power tool system, not only may the first battery pack be coupled with the first power tool to output the first working voltage, but the first power tool and the second power tool may also be interchangeably coupled to the second battery pack, and through connecting different numbers of the battery cells in the second battery pack in series, the first working voltage may be output to the first power tool and the second working voltage may be output to the second power tool accordingly.

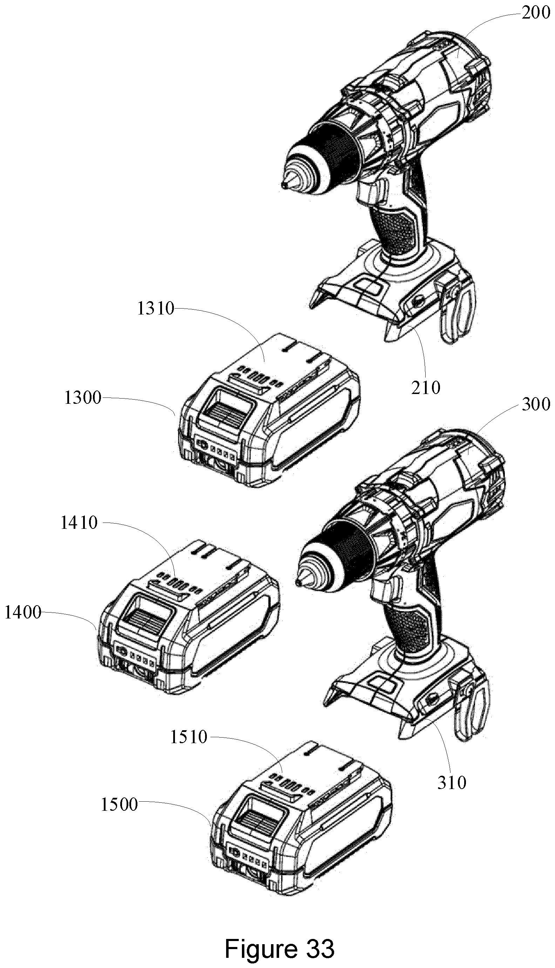

Please refer to FIG. 33. One or more embodiments of the disclosure further provide the power tool system. The power tool system may improve a problem in the conventional power tool system that the power tool is not compatible with both the single-voltage battery pack and the double-voltage battery pack. The power tool system includes the first power tool 200, the second power tool 300, a first battery pack 1300 and a second battery pack 1400. The first power tool 200 and the second power tool 300 may be any suitable tools that can be powered by the battery pack, such as a garden trimmer, a motorized chain saw, a blower suction machine, a washing machine, a mower and the like. In the disclosure, the first power tool 200 has the first tool interface 210 and works with the first working voltage. The first power tool 200 may be connected with the corresponding first battery pack 1300 through the first tool interface 210. The second power tool 300 is provided with the second tool interface 310 and works with the second working voltage. The first power tool 200 may be connected with the first battery pack 1300 or the second battery pack 1400 through the first tool interface 210.

In the power tool system of the disclosure, not only may the first battery pack 1300 be coupled with the first power tool 200 to output the first working voltage, but the first power tool 200 and the second power tool 300 may also be interchangeably coupled to the second battery pack 1400, and through connecting different numbers of the battery cells in the second battery pack 1400 in series, the first working voltage may be output to the first power tool 200 and the second working voltage may be output to the second power tool 300 accordingly.

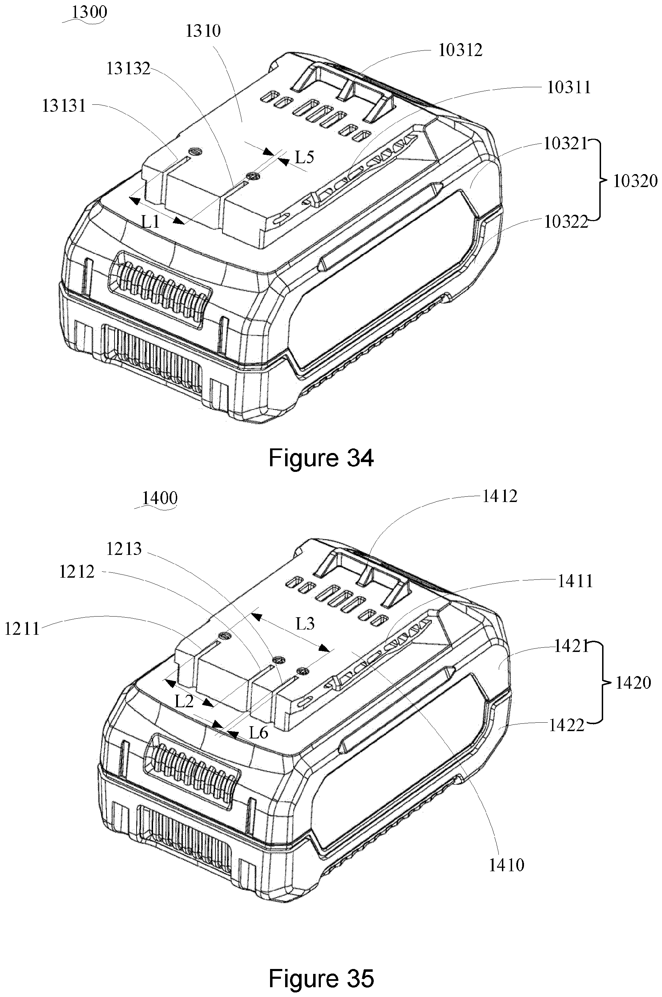

Please refer to FIG. 34. The first battery pack 1300 in one or more embodiments of the disclosure can be any battery pack structure that may be matched and connected with the first power tool 200. In this embodiment, the first battery pack 1300 includes a first battery housing 10320, at least one first battery cell string and a first battery interface 1310. A structure of the first battery housing 10320 in the disclosure is not limited, as long as the housing cavity is formed inside for mounting the power supply cell string. The first battery housing 10320 in this embodiment includes a first battery upper housing 10321 and a first battery lower housing 10322. The first battery upper housing 10321 and the first battery lower housing 10322 are connected to form a first battery housing cavity (not shown) in the first battery housing 10320. There are many ways to connect the first battery upper housing 10321 and the first battery lower housing 10322, such as a bolt connection, etc. A first battery cell bracket (not shown) is mounted in the first battery housing cavity, and the first battery cell string may be stably mounted in the first battery cell housing cavity through the battery cell bracket. When the first power tool 200 is connected with the first battery pack 1300, the first tool interface 210 is connected with the first battery interface 1310, and the first battery pack 1300 outputs the first working voltage to the first power tool 200.

Please refer to FIG. 35. The second battery pack 1400 includes a second battery housing 1420, a second battery interface 1410 and at least one second battery cell string. The second battery housing 1420 includes a second battery upper housing 1421 and a second battery lower housing 1422, and the second battery upper housing 1421 and the second battery lower housing 1422 are connected to form a second battery cell housing cavity (not shown) in the second battery housing 1420. The second battery cell string includes the plurality of the battery cells connected in series, and the plurality of the battery cells connected in series are fixedly mounted in the second battery cell housing cavity. When the first power tool 200 is connected with the second battery pack 1400, the first tool interface 210 is connected with the second battery interface 1410, and the first number of the battery cells in the second battery cell string connected in series output the first voltage to the first power tool 200. When the second power tool 300 is connected with the second battery pack 1400, the second tool interface 310 is connected with the second battery interface 1410, and the second number of battery cells in the battery cell string connected in series output the second voltage to the second power tool 300.

Please refer to FIG. 33, FIG. 35 and FIG. 6. The second battery cell string in the embodiment of the disclosure includes the first battery cell unit and the second battery cell unit. The first battery cell unit includes the first number (e.g., n battery cells: Cell₁ to Cellₙ) of the first battery cells connected in series, and the second cell unit includes the second number (e.g., 2n battery cells: Cell₁ to Cell₂ₙ) of the second cells connected in series. The first number is smaller than the second number; when the second battery pack 1400 is in the first working voltage output state, the first number of battery cells in the second battery string can output the first working voltage to the corresponding first power tool 200; when the second battery pack 1400 is in the second working voltage output state, the second number of battery cells in the battery string can output the second working voltage to the corresponding second power tool 300. In another embodiment, when the second battery pack 1400 is matched and connected with the first power tool, the second battery pack 1400 outputs the first working voltage to the first power tool 200. When the second battery pack 1400 is matched and connected with the second power tool 300, the second battery pack 1400 outputs the second working voltage to the second power tool 300.

Please refer to FIG. 33. In the disclosure, a relationship between the second power tool 300 and the first battery pack 1300 may not be limited. For example, the second power tool 300 and the first battery pack 1300 may work in a corresponding matching mode. However, in one embodiment of the disclosure, the first battery pack 1300 may be a conventional single-voltage battery pack, and a specific structure will not be described in detail. The second power tool 300 cannot be matched with the first battery pack 1300, and the first battery pack 1300 can only output the first working voltage to the first power tool 200 when matched with the first power tool 200.

Please refer to FIG. 34 and FIG. 35. In an embodiment of the disclosure, the first battery interface 1310 includes a first battery positive terminal 13132 and a first battery negative terminal 13131. The second battery interface 1410 includes the first positive terminal 1212, the second positive terminal 1213 and the negative terminal 1211. The first power tool 200 includes a first tool positive terminal (not shown) and a first tool negative terminal (not shown), and the second power tool 300 includes a second tool positive terminal (not shown) and a second tool negative terminal (not shown). A horizontal distance between the first battery positive terminal 13132 and the first battery negative terminal 13131 is L1, and a horizontal distance between the first positive terminal 1212 and the negative terminal 1211 is L2. L1 is substantially equal to L2, and a horizontal distance between the second positive terminal 1213 and the negative terminal 1211 is L3, wherein L3 is greater than L2. In this way, the first battery pack 1300 and the second battery pack 1400 may be interchangeably electrically connected with the first tool positive terminal and the first tool negative terminal on the first power tool 200. When the first battery interface 1310 is matched and connected with the first tool interface 210, the first tool positive terminal is electrically connected with the first battery positive terminal 13132, and the first tool negative terminal is electrically connected with the tool negative terminal 1211 of the first battery pack 1300. The first battery pack 1300 provides the first working voltage to the first power tool 200. When the second battery interface 1410 is matched and connected with the first tool interface 210, the first tool positive terminal is electrically connected with the first positive terminal 1212, and the first tool negative terminal is electrically connected with the first negative terminal 1211. The second battery pack 1400 provides the first working voltage to the first power tool 200.

Please refer to FIG. 34. In the disclosure, a specific value of the horizontal distance L1 between the first battery positive terminal 13132 and the first battery negative terminal 13131 may not be limited. In one embodiment of the disclosure, L1 is from 20cm to 50cm, for example, 20cm, 25cm, 30cm, 35cm, 40cm, 45cm, or 50cm.

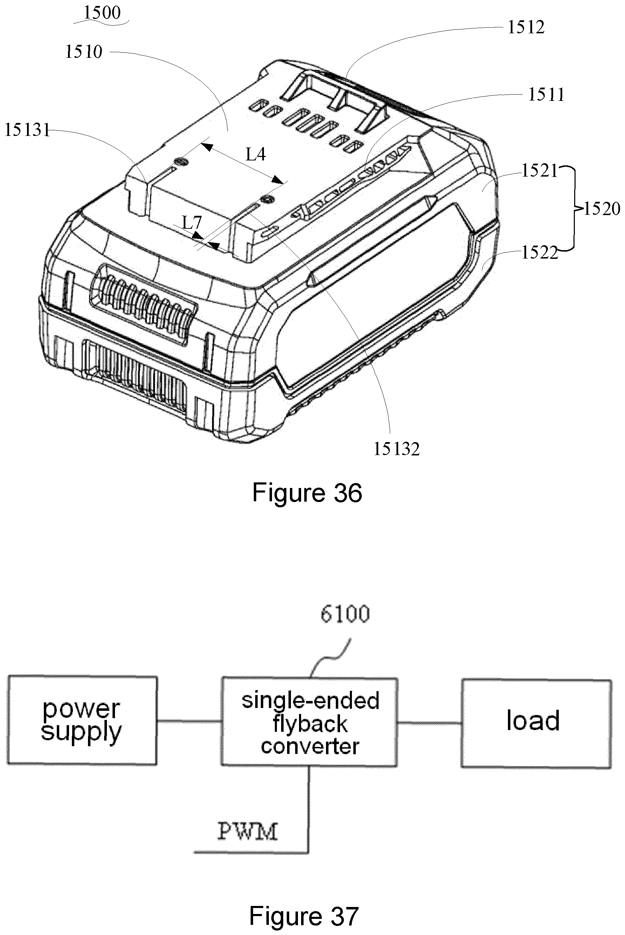

Please refer to FIG. 36. In an embodiment of the disclosure, the power tool system further includes a third battery pack 1500, which may provide the second working voltage for the second power tool 300. The third battery pack 1500 includes a third battery pack housing 1520, which includes a third battery pack upper housing 1521 and a third battery pack lower housing 1522. The third battery pack upper housing 1521 and the third battery pack lower housing 1522 are connected to form a third battery cell housing cavity (not shown) in the third battery pack housing 1520. There are many ways to connect the third battery pack upper housing 1521 and the third battery pack lower housing 1522, such as the bolt connection, etc. The plurality of the battery cells are mounted in the third battery housing cavity. The third battery pack 1500 further includes a third battery interface 1510. The third battery interface 1510 includes a third battery positive terminal 15132 and a third battery negative terminal 15131. When the third battery pack 1500 is connected with the second power tool 300, the third battery pack 1500 outputs the second working voltage to the second power tool 300.

Please refer to FIG. 35 and FIG. 36. In the disclosure, as long as a reliable electrical connection between the third battery pack 1500 and the second power tool 300 may be achieved, a distance and arrangement between the third battery positive terminal 15131 and the third battery negative terminal 15131 may not be limited. Considering a corresponding matching relationship between the second power tool 300 and the second battery pack 1400, in one embodiment of the disclosure, a horizontal distance L3 between the second positive terminal 1213 and the negative terminal 1211, a horizontal distance L4 between the third battery positive terminal 15132 and the third battery negative terminal 15131, and a horizontal distance between the second tool positive terminal and the second tool negative terminal are substantially equal. In this way, the third battery pack 1500 and the second battery pack 1400 may be interchangeably electrically connected with the second tool positive terminal and the second tool negative terminal of the second power tool 300.

In an embodiment of the disclosure, the first battery interface 1310 is the same as a conventional single-voltage battery interface, and the third battery interface 1510 is different from the first battery interface 1310. There are two terminal grooves on the first battery interface 1310, and the first battery positive terminal 13132 and the first battery negative terminal 13131 are respectively arranged in the two terminal grooves. In one embodiment of the disclosure, a width L5 of each terminal groove may be any value between 1 mm and 3 mm, for example, it may be 1 mm, 1.5 mm, 2 mm, 2.5 mm, or 3 mm. Considering a relationship between a thickness of a corresponding electrical plugging piece and an electrical connection stability, in some embodiments, a width of about 2.5 mm is used in one embodiment of the disclosure.

In an embodiment of the disclosure, there are three terminal grooves on the second battery interface 1410, and the first positive terminal 1212, the second positive terminal 1213 and the negative terminal 1211 are respectively arranged in the corresponding terminal grooves. A width L6 of each terminal groove may be any value between 1 mm and 3 mm, for example, it may be 1 mm, 1.5 mm, 2 mm, 2.5 mm, or 3 mm. Considering the relationship between the thickness of the corresponding electrical plugging piece and the electrical connection stability, in some embodiments, the width of about 2.5 mm is used in one embodiment of the disclosure.

In an embodiment of the disclosure, there are two terminal grooves on the third battery interface 1510, and the third battery positive terminal 15132 and the third battery negative terminal 15131 are respectively arranged in the corresponding terminal grooves. A width L7 of each terminal groove may be any value between 1 mm and 3 mm, for example, it may be 1 mm, 1.5 mm, 2 mm, 2.5 mm, or 3 mm. Considering the relationship between the thickness of the corresponding electrical plugging piece and the electrical connection stability, in some embodiments, the width of about 2.5 mm is used in one embodiment of the disclosure.

Please refer to FIG. 34 through FIG. 35. In an embodiment of the disclosure, the first battery interface 1310 further includes a first guiding rail 10311, a first buckle 10312 and a communication port (not shown). The second battery interface 1410 further includes a second guiding rail 1411, a second buckle 1412 and a communication port (not shown). The third battery interface 1510 further includes a third guiding rail 1511, a third buckle 1512 and a communication port (not shown). The second tool interface 310 is provided with one or more sliding grooves (not shown) matching the second guiding rail 1411 and the third guiding rail 1511. The corresponding guiding rails and the corresponding sliding grooves are matched with each other to guide a connection between the corresponding battery pack and a mechanical connection structure of the second power tool 300. The second tool interface 310 is provided with one or more locking grooves (not shown) matching the first buckle 10312, the second buckle 1412 and the third buckle 1512. The corresponding buckles and the corresponding locking grooves are matched with each other to lock the corresponding battery pack after the mechanical and electrical connection on the second power tool 300. It should be noted that, the guiding rail, the buckle and the output terminal on the battery pack in this disclosure may be arranged in any suitable conventional structure, which will not be described in detail. In an embodiment of the disclosure, the second guiding rail 1411 and the third guiding rail 1511 may be interchangeably connected with the same sliding groove on the second tool interface 310, and the second buckle 1412 and the third buckle 1512 may be interchangeably connected with the same locking groove on the second tool interface 310. It should be noted that, the first power tool 200 is further provided with a sliding groove matching the first guiding rail 10311 and a locking groove matching the first buckle 10312. Structures of the sliding groove and the locking groove may be based on a conventional structure and will not be described in detail.

In an embodiment of the power tool system of the disclosure, the first battery pack 1300, the second battery pack 1400 and the third battery pack 1500 further includes the corresponding control unit and communication port. The communication port is electrically connected with the control unit, the first power tool further includes a first communication terminal (not shown) matching the communication port, the second power tool 300 further includes a second communication terminal (not shown) matching the communication port. When the second battery pack 1400 is connected with the first power tool 200, the communication port is electrically connected with the first communication terminal, and the control unit controls the second battery pack 1400 to output the first working voltage. When the second battery pack 1400 is connected with the second power tool 300, the communication port is electrically connected with the second communication terminal, and the control unit controls the second battery pack 1400 to output the second working voltage.

Please refer to FIG. 6. In an embodiment of the power tool system of the disclosure, the negative terminal 1211 of the second battery pack 1400 is electrically connected with the negative electrode of the second battery cell string (the battery cell string 130), and the first positive terminal 1212 is electrically connected with the first position 131 on the second battery cell string 430. There are the first number of the battery cells (e.g., n battery cells: Cell₁ to Cellₙ) connected in series in sequence between the first position 131 and the negative electrode. The second positive terminal 1213 is electrically connected with the second position 132 on the second battery cell string 430, and the second number of the battery cells (e.g., 2n battery cells: Cell₁ to Cell₂ₙ) are connected in series in sequence between the second position 132 and the negative electrode. When the first power tool 200 is connected with the second battery pack 1400, the first tool interface 210 is connected with the second battery interface 1410, and the first number of the battery cells output the first voltage through the negative terminal 1211 and the first positive terminal 1212. When the second power tool 300 is connected with the second battery pack 1400, the second tool interface 310 is mechanically and electrically connected with the second battery interface 1410, and the second number of the battery cells output the second voltage through the negative terminal 1211 and the second positive terminal 1213.

Please refer to FIG. 6 and FIG. 35. In an embodiment of the disclosure, the second battery interface 1410 further includes at least two positive charging terminals CH1+ and CH2+, where CH1+ and P-, and CH2+ and P- may be electrically connected with the corresponding chargers to receive at least two voltage inputs. The positive charging terminals (CH1+, CH2+ and P-) may be independently arranged with the output terminal, or may share one terminal with the output terminal. In an embodiment of the battery pack of the disclosure, the second battery pack 1400 may be connected with the charger through the first positive terminal 1212 and the negative terminal 1211, and receive an electrical energy input of the first working voltage to charge the first number of the battery cells between the first position 131 and the negative electrode. The second battery pack 1400 may be connected with the charger through the second positive terminal 1213 and the negative terminal 1211, and receive the electrical energy input of the second working voltage to charge the second number of the battery cells between the second position 132 and the negative electrode.

Please refer to FIG. 6. The second battery pack 1400 further includes the control unit 1311, the voltage detection unit 1319, the temperature detection unit 1313, the balancing unit 1312, the first load detection unit 1316, the second load detection unit 1317, the power display unit 1318, the communication unit 1320, the I2C control unit 1315, and the low dropout linear regulator 1314 (LDO). The control unit 1311 is powered by an entire second battery cell string 430, and corresponding terminals of the control unit 1311 are electrically connected with the positive electrode and the negative electrode of the second battery cell string 430 respectively. The linear regulator 1314 is electrically connected between the control unit 1311 and the positive electrode of the second battery cell string 420, and provides the stable voltage for the control unit 1311. The voltage detection unit 1319 is electrically connected with each battery cell in the second battery cell string 430 to detect the voltage of the battery cell, and transmits the detection result to the control unit 1311 through the I2C module. In an embodiment, the voltage detection unit 1319 is an AFE (analog front end). The temperature detection unit 1313 detects the temperature of each battery cell and transmits the detection result to the control unit 1311. The second battery interface 1410 further includes the communication port 1215, which is connected with the control unit 1311 through the communication unit 1320 and is used to communicate with the charger and/or the power tool. The power display unit 1318 is electrically connected with the control unit 1311 and is used to display a power of the second battery pack 1400. The first load detection unit 1316 is electrically connected with the control unit 1311 and the positive electrode of the second battery cell string 430 respectively. The second load detection unit 1317 is electrically connected with the control unit 1311 and the second battery cell string 430 respectively. The first load detection unit 1316 and the second load detection unit 1317 are used to identify devices externally connected to determine whether the connected device is a first working voltage device or a second working voltage device.

Please refer to FIG. 17 through FIG. 22. FIG. 17 through FIG. 22 shows another embodiment of the second battery pack 1400. The second battery cell string 430 includes the switch unit and the plurality of battery cells connected in series in sequence, and the output terminal includes the first positive terminal 1212, the second positive terminal 1213, the negative terminal 1211, and the charging positive terminal 1216. The negative terminal 1211 is electrically connected with the negative electrode of the second battery cell string 430, and the first positive terminal 1212 is electrically connected with the first position 131 on the second battery cell string 430. There are the first number of the battery cells (e.g., n battery cells: Cell₁ to Cellₙ) connected in series between the first position 131 and the negative electrode. The second positive terminal 1213 is electrically connected with the second position 132 on the second battery cell string 430, and the second number of the battery cells (e.g., 2n battery cells: Cell₁ to Cell₂ₙ) are connected in series in sequence between the second position 132 and the negative electrode. The charging positive terminal 1216 is electrically connected with the first position 131 of the second battery cell string 430 through the first charging loop 144, and the charging positive terminal 1216 is electrically connected with the second position 132 of the second battery cell string 420 through the second charging loop 145. The switch unit includes the first charging switch 1441 and the second charging switch 4451. The first charging switch 1441 is arranged on the first charging loop 144 and is electrically connected with the first driving unit. The second charging switch 4451 is arranged on the second charging loop 145 and is electrically connected with the second driving unit. The control unit 1311 of the battery pack is electrically connected with the first driving unit 1412 and the second control unit 1311 respectively. The switch unit includes the first state, the second state and the third state. When the switch unit is in the first state, the control unit 1311 drives the first charging switch 1441 and the second charging switch 1451 to be completely disconnected through the first driving unit and the second driving unit, and at this time the battery pack may output the first working voltage through the first positive terminal 1212 and the negative terminal 1211 or outputs the second working voltage through the second positive terminal 1213 and the negative terminal 1211. When the switch unit is in the second state, the control unit 1311 drives the first charging switch 1441 to turn on Q1 through the first driving unit, and drives the second switch to be turned off through the second driving unit. The charging terminal and the negative terminal 1211 charge the first number of the battery cells connected in series. When the switch unit is in the third state, the control unit 1311 drives the first charging switch 1441 to be turned off through the first driving unit, and drives the second charging switch 1451 to be turned on through the second driving unit, and the charging positive terminal 1216 and the negative terminal 1211 charge the second number of the battery cells connected in series. The battery pack further includes the sampling resistance 1321, which is mounted on the first current loop 141 between the first positive terminal 1212 and the second battery cell string 130. The control unit 1311 samples a current state between the first positive terminal 1212 and the second battery cell string 130 through the current detection unit, and adjusts an output and shutdown of the first working voltage and the second working voltage according to the current state.

Please refer to FIG. 33, FIG. 17 through FIG. 20. The communication port 1215 is pulled up to activate the battery pack, and the control unit 1311 detects the current I on the sampling resistor 1321. At this time, the absolute value of the current I is greater than 0, and the battery pack is configured as the V1 voltage discharging mode. The communication unit 1320 sends the handshake information in the discharging mode to establish the correct communication connection with the first power tool 200, and the first power tool 200 starts to work normally. During working, the control unit 1311 monitors the voltage of Cell₁~Cell₂ₙ and the temperature of the battery pack. When the detected voltage and/or temperature are abnormal, the communication unit 1320 sends the abnormal signal to the first power tool 200, and the first power tool 200 stops working. When the second power tool 300 is connected, the communication port 1215 is pulled up to activate the BMS of the battery pack, and the control unit 1311 detects the current I on the sampling resistor 1321. At this time, the absolute value of the current I is equal to 0, and the battery pack is configured as the V2 voltage discharging mode. The communication unit 1320 sends the handshake information in the discharging mode to establish the correct communication connection with the second power tool 300, and the second power tool 300 starts to work normally. During working, the control unit 1311 monitors the voltage of Cell₁~Cell₂ₙ and the temperature of the battery pack. When the detected voltage and/or temperature are abnormal, the communication unit 1320 sends the abnormal signal to the second power tool 300, and the second power tool 300 stops working.

Please refer to FIG. 21 through FIG. 22. The charger may charge the first number of battery cells in the battery cell string with the first working voltage through the positive charging port CH+ and the negative charging port P-, and may also charge the second number of battery cells in the battery cell string with the second working voltage through the positive charging port CH+ and the negative charging port P-. The charger activates the battery pack through the COM, and the control unit 1311 of the battery pack detects the voltage and temperature of the battery cells inside the battery. When the voltage difference △V between the second position 132 and the first position 131 is greater than or equal to the set threshold (for example, greater than or equal to 100mV), the battery pack sends n strings of the handshake information through a COM terminal, at the same time the control unit 1311 controls Q1 to be turned on and Q2 to be turned off, and the charger charges the battery pack with the first working voltage. Until the voltage difference △V between the second position 132 and the first position 131 is less than the set threshold (for example, less than 100mV), the COM port of the battery pack sends 2n strings of the handshake information, at the same time the control unit 1311 controls Q2 to be turned on and Q1 to be turned off, and the charger charges the battery pack with the second working voltage. At this time, the battery pack is in the second voltage charging stage. Please refer to FIG. 12. In another embodiment, the battery pack further includes the plurality of battery cell strings, for example m battery cell strings, and m is a natural number greater than or equal to 2. The m battery cell strings are connected in parallel. The first positive terminal 1212 is electrically connected with the first position 131 on each of the battery cell strings, and the second positive terminal 1213 is electrically connected with the second position on each of the battery cell strings. The negative terminal 1211 is electrically connected with the negative electrode of each of the battery cell strings. The first number (for example n) of the battery cells are connected in series between the first position 131 and the negative electrode on each of the battery cell strings, and the second number (for example 2n) of the battery cells are connected in series between the second position 132 and the negative electrode on each of the battery cell strings. The second number is greater than the first number, so that the second working voltage is greater than the first working voltage. The battery pack may output the first working voltage through the first positive terminal 1212 and the negative terminal 1211, and the battery pack may output the second working voltage through the second positive terminal 1213 and the negative terminal 1211.

Please refer to FIG. 32. In FIG. 32, in another embodiment of the disclosure, and the second battery pack 1400 is different from the second battery pack 1400 in FIG. 6 in that the second battery cell string 130 includes the first battery group and the second battery group. The first battery group includes the first number (for example n) of battery cell units, the second battery group includes the second number (for example 2n) of the battery cell units. The battery cell unit includes two or the plurality of battery cells connected in parallel, and the number of the battery cell units in the second battery group is greater than the number of battery units in the first battery group. The first battery pack outputs the first working voltage through the output terminal, and the second battery pack outputs the second working voltage through the output terminal. This arrangement method may expand a capacity of the second battery pack 1400 by connecting the plurality of the battery cells in parallel in each battery group.

Please refer to FIG. 30. In another embodiment of the second battery pack of the disclosure, the second battery pack 1400 is different from the battery pack in FIG. 17 in that the second battery pack 1400 includes the plurality of the second battery cell strings 130. The plurality of second battery cell strings 130 are arranged in a second battery housing cavity and are arranged in parallel. The negative terminal 1211 is electrically connected with the negative electrodes of the plurality of the second battery cell strings 130, and the first positive terminal 1212 is electrically connected with the first equipotential position on each of the second battery cell strings 130. The second battery pack 1400 outputs the first working voltage through the first positive terminal 1212 and the negative terminal 1211. The second positive terminal 1213 is electrically connected with the second equipotential position on each of the second battery cell strings 130, and the second battery pack 1400 outputs the second working voltage through the second positive terminal 1213 and the negative terminal 1211. In this embodiment, as long as the potential at the connection between the first current loop 141 and the plurality of the second battery cell strings 130 is equal, and the potential at the connection between the second current loop 142 and the plurality of the second battery cell strings 130 is equal, the number of battery cells that output the first working voltage and the output voltage, and the number of battery cells that output the second working voltage and the output voltage are not limited.

It should be noted that, in the above embodiments, the examples of the first number n and the second number 2n do not limit the corresponding multiple relationship between the second number and the first number. For example, in some other embodiments, when the first number is n, and the second number may correspond to n+t, where the above n and t may all be any natural numbers.

In the power tool system of the disclosure, not only may the first battery pack be coupled with the first power tool to output the first working voltage, but the first power tool and the second power tool may also be interchangeably coupled to the second battery pack, and through connecting different numbers of the battery cells in the second battery pack in series, the first working voltage may be output to the first power tool and the second working voltage may be output to the second power tool accordingly.

Synchronous rectification is a new technology that uses a dedicated power MOSFET with an extremely low on-resistance to replace a rectifier diode to reduce a rectification loss. It can greatly improve efficiency of a DC/DC converter and there is no dead zone voltage caused by a Schottky barrier voltage. It may meet product's requirements for efficiency, temperature rise, noise and other parameters, reduce the rectification losses, and comply with a concept of an energy conservation and environmental protection. The single-ended flyback converter is a most widely used DC-DC conversion circuit topology. It is widely used in low-power cases due to its simple structure, reliable operation, and easy design and production.

Please refer to FIG. 1 and FIG. 2. An input side and output side of the conventional single-ended flyback converter are connected with the power supply and the load respectively. It mainly includes the switch transistor Q1, a power transformer T1 and a synchronous rectifier Q2. A switching signal of the switch transistor Q1 and a driving signal of the synchronous rectifier Q2 mostly use independent dedicated synchronous rectifier chips. Through closing and turning on the switch transistor Q1, a high-frequency square wave signal is generated at both ends of the power transformer T1. The power transformer T1 transmits the generated square wave signal to a secondary coil in a form of magnetic field induction, and obtains a stable DC output at an output end through the synchronous rectifier Q2. Some engineers even use quasi-resonant converter (QRC) to control a switch of synchronous rectifiers. The above method has following problems:
1. synchronous rectification circuit control technology is generally used in cases where high power conversion efficiency is required. Characteristics of this product are generally low output voltage and large output current. Due to a power consumption of the synchronous rectification chip itself, the synchronous rectification circuit controlled by the chip has an additional energy efficiency loss point.
2. a working voltage range of the synchronous rectification chips commonly used in a market is relatively low, which is not suitable for cases with high output voltages, and chip peripheral circuits require additional circuits to ensure that the chip can work normally, which increases costs.
3. QRC control mode also has a problem of the energy efficiency loss, and synchronous rectification control accuracy with the QRC mode is not high. A QRC circuit of a product does not work properly in a light load mode, which may easily cause the synchronous rectifier to work in a mild short-circuit state.

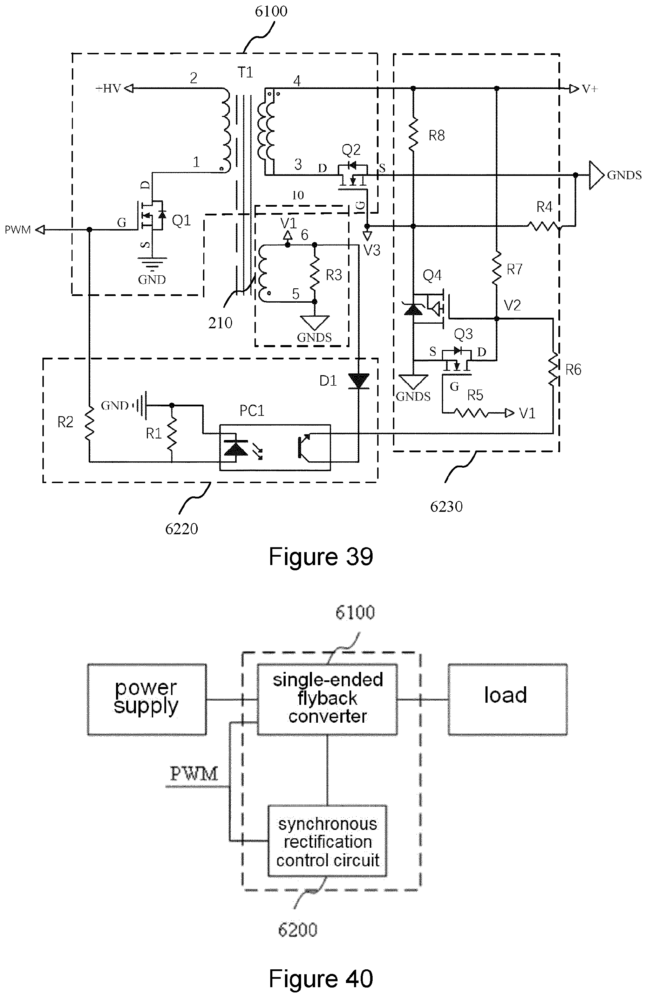

Please refer to FIG. 39. The disclosure further provides a synchronous rectification control circuit 6200. The synchronous rectification control circuit 6200 is applied for a single-ended flyback converter 6100 and is used to provide a driving signal for the single-ended flyback converter 6100. The synchronous rectification control circuit and a flyback switching power supply are improved on a basis of a conventional synchronous rectification topology circuit, and the single-ended flyback converter and the synchronous rectification control circuit are distinguished. When a device works abnormally or is damaged, the synchronous rectifier will not be damaged due to a damage of a control circuit device or will not be short-circuited. A primary side switch transistor and a secondary synchronous rectifier are controlled simultaneously by controlling a PWM driving chip signal of a primary side transformer half-bridge switch MOS, and a synchronous rectification driving chip is not required, which has a good consistency, is suitable for high-voltage output cases, reduces product cost, and may be used to solve problems of high power consumption and unsuitability for cases with high output voltage in the prior art.

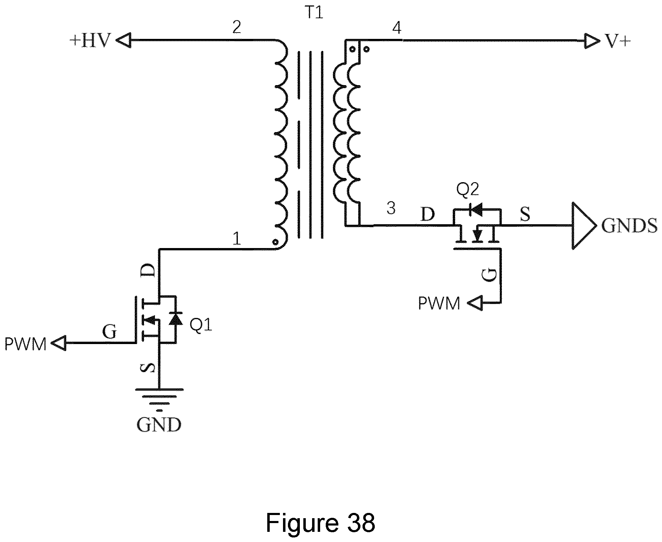

Please refer to FIG. 38. Core components of the single-ended flyback converter 6100 in this embodiment include the switch transistor Q1, the power transformer T1 and the synchronous rectifier Q2. Anon-dotted end of a primary side of the power transformer T1 is connected with the power supply, and a dotted end of the primary side of the power transformer T1 is connected with a drain of the switch transistor Q1. A gate of the switch transistor Q1 is connected with a pulse width modulation signal (PWM), and a source of the switch transistor Q1 is grounded. A dotted end of a secondary side of the power transformer T1 is connected with the positive electrode of the load, and a non-dotted end of the secondary side of the power transformer T1 is connected with a drain of the synchronous rectifier Q2. A source of the synchronous rectifier Q2 is connected with the negative electrode of the load, and a gate of the synchronous rectifier Q2 is connected with the synchronous rectification control circuit 6200. A DC (direct current) voltage is output to the load according to the driving signal output by the synchronous rectification control circuit 6200.

Specifically, the synchronous rectification control circuit 6200 mainly includes a driving winding 6210, a separating module 6220 and a driving module 6230.

The driving winding 6210 is coupled with an input winding of the single-ended flyback converter 6100 and is in a same phase with the input winding of the primary side. With this method, a synchronous driving voltage level of the driving winding 6210 and the primary coil may be achieved. The non-dotted end of the driving winding 6210 are respectively connected with an output end of the separating module 6220 and a first input end of the driving module 6230, and a dotted end of the driving winding 6210 is grounded. The driving winding 6210 senses a magnetic field change of the primary side of the power transformer T1 and generates a corresponding AC (alternating current) voltage signal. Further, the synchronous rectification control circuit 6200 further includes a third resistance R3, which is connected in parallel to both ends of the driving winding 6210. Through adjusting a resistance value of the third resistance R3, a magnitude of the AC voltage signal may be appropriately adjusted.

An input end of the separating module 6220 is connected with a PWM signal, and the output end of the separating module 6220 is further connected with an output end of the driving winding 6210 and a second input end of the driving module 6230. The separating module 6220 is used to realize a separation between a main circuit and a control circuit to avoid an influence of a disturbance signal on the control circuit Further, the separating module 6220 includes an optocoupler PC1 and the first resistance R1, two ends of an input side of the optocoupler PC1 are connected in parallel with the first resistance R1, a positive pole of the optocoupler PC1 at the input side is connected with the PWM signal, and a negative pole of the optocoupler PC1 at the input side is grounded. A collector of an output side of the optocoupler PC1 is connected with the non-dotted end of the driving winding 6210, and an emitter is connected with the second input end of the driving module 6230. Further, the separating module 6220 further includes the second resistance R2 and a diode D1. A first end of the second resistance R2 is connected with the PWM signal and a second end of the second resistance R2 is connected with a positive electrode of the input side of the optocoupler PC1. Resistance values of the first resistance R1 and the second resistance R2 may be appropriate to the PWM signal. A positive electrode of the diode D1 is connected with the non-dotted end of the driving winding 6210, and a negative electrode of the diode D1 is connected with the collector of the output side of the optocoupler PC1. When the non-dotted end of the driving winding 6210 is a high voltage level and the optocoupler PC1 is turned on, the high voltage level may be output to the driving module 6230 through output ends of the diode D1 and the optocoupler PC1.

It should be noted that, the optocoupler PC1 in this embodiment should be a high-speed separating photocoupler that may work under a high-speed switching mode. Through the high-speed separating photocoupler, a PWM driving signal of the primary side may be transmitted to the synchronous rectifier Q2 of the secondary side, which realizes a consistency of a high synchronous driving of the switching signal and the driving signal.

The output end of the driving module 6230 is connected with a control end of the synchronous rectifier of the single-ended flyback converter and is used to output the driving signal to the gate of the synchronous rectifier Q2. Further, the driving module 6230 includes a third MOS transistor Q3, a fourth MOS transistor Q4 and the fourth resistance R4. A gate of the third MOS transistor Q3 serves as the first input end of the driving module and is connected with the non-dotted end of the driving winding 6210. A drain of the third MOS transistor Q3 serves as the second input end of the driving module 6230 and is respectively connected with the output end of the separating module 6220, a gate of the fourth MOS transistor Q4 and a dotted end of an output winding of the single-ended flyback converter 6100. A source of the fourth MOS transistor Q4 is connected with a dotted end of the output winding of the single-ended flyback converter 6100 and the control end of the synchronous rectifier Q2 of the single-ended flyback converter 6100. The control end of the synchronous rectifier Q2 is grounded through the fourth resistance R4, and a source of the third MOS transistor Q3 and a drain of the fourth MOS resistance Q4 are respectively grounded. Further, the driving module 6230 further includes the fifth resistance R5. A first end of the fifth resistance R5 is connected as the first input end of the driving module 6230 with the non-dotted end of the driving winding 6210, and a second end of the fifth resistance R5 is connected with the gate of the third MOS transistor Q3. Further, the driving module 6230 further includes the sixth resistance R6. A first end of the sixth resistance R6 is connected as the second input end of the driving module 6230 with the output end of the separating module 6220, and a second end of the sixth resistance R6 is connected with the drain of the third MOS transistor Q3, the gate of the fourth MOS transistor Q4 and the dotted end of the output winding of the single-ended flyback converter 6100 respectively. Further, the driving module 6230 further includes a seventh resistance R7 and an eighth resistance R8. A first end of the seventh resistance R7 is connected with the second end of the sixth resistance R6, the drain of the third MOS transistor Q3 and the gate of the fourth MOS transistor Q4 respectively. A second end of the seventh resistance R7 is connected with the dotted end of the output winding of the single-ended flyback converter 6100. A first end of the eighth resistance R8 is connected with the source of the fourth MOS transistor Q4, the control end of the synchronous rectifier Q2 and the first end of the fourth resistance R4 respectively. A second end of the eighth resistance R8 is connected with the dotted end of the output winding of the single-ended flyback converter 6100.

It should be noted that, in this embodiment, the third MOS transistor Q3 is an N-channel MOS transistor and the fourth MOS transistor Q4 is a P-channel MOS transistor.

With the above structure, both of the driving signal and switching signal of the single-ended flyback converter 6100 come from the PWM signal of the primary side, so that the flyback switching power supply may be used in cases with higher output voltage, which solves a problem of no synchronous rectification chip may be selected when the output voltage is high.

It should be understood that the synchronous rectification control circuit 6200 of this embodiment may be extended to an output synchronous rectification driving control of an LLC switching power supply and a double-transistor forward switching power supply.

A working principle of the synchronous rectification control circuit 6200 is described below:
When the PWM signal of the gate of the switch transistor Q1 is the high voltage level, the switch transistor Q1 is turned on, and the current passes through primary coils 2 to 1 of the power transformer T1. At the same time, the high voltage level of the PWM signal passes through the resistance R2 to the positive electrode of the input end of the optocoupler PC1, and the optocoupler PC1 is turned on. Since a phase of the driving winding 6210 is the same as that of the primary side of the power transformer T1, the voltage V1 at the non-dotted end of the driving winding 6210 is at the high voltage level. The high voltage level flows into the gate of the third MOS transistor Q3 through the fifth resistance R5 and into the drain of the third MOS transistor Q3 and the gate of the fourth MOS transistor Q4 through the sixth resistance R6, so that the third MOS transistor Q3 is turned on, a gate voltage level of the fourth MOS transistor Q4 is lowered and the fourth MOS transistor Q4 is turned on. At this time, a gate voltage V3 of the synchronous rectifier Q2 is pulled down, and the synchronous rectifier Q2 is closed. At this time, the power transformer T1 is in an energy storage state, and the circuit completes half of a working cycle.

When the PWM signal of the gate of the switch transistor Q1 is a low voltage level, the switch transistor Q1 is turned off, the optocoupler PC1 is turned off, the gate voltage V1 of the third MOS transistor Q3 is the low voltage level, and the third MOS transistor Q3 works in a cut-off state. According to the working principle of a flyback transformer, it may be known that when there is the current passing through the primary coil of power transformer T1, the secondary coil works in an energy charging state and the primary coil and the secondary coil have different poles. Therefore, when no current passes through the primary coils 2 to 1 of the power transformer T1, an electromotive force of secondary coils 3 to 4 reverses. At this time, a dotted end of the secondary coil is at the high voltage level, and the high voltage level is turned on to the gate of the synchronous rectifier Q2 through the eighth resistance R8. Since the optocoupler PC1 is turned off due to a disappearance of a primary PWM signal, the third MOS transistor Q3 is turned off and the gate voltage V2 of the fourth MOS transistor Q4 cannot be connected with the low voltage level. At this time, the high voltage level at the dotted end of the secondary coil is turned on to the gate of the fourth MOS transistor Q4 through the seventh resistance R7. Since the fourth MOS transistor Q4 is the P-channel MOS transistor, the gate voltage V3 of the synchronous rectifier Q2 is maintained at the high voltage level and works in an off state, the synchronous rectifier Q2 is turned on and works in a rectification state, which supplies electric energy to the load at a back end until the gate voltage V3 turns to the low voltage level, and the whole circuit completes a complete rectification.

It may be seen that, the synchronous rectification control circuit and the flyback switching power supply in this embodiment are improved on the basis of the conventional synchronous rectification topology circuit, and the single-ended flyback converter 6100 and the synchronous rectification control circuit 6200 are distinguished. When the device works abnormally or is damaged, the synchronous rectifier will not be damaged due to the damage of the control circuit device or will not be short-circuited. The primary side switch transistor and the secondary synchronous rectifier are controlled simultaneously by controlling the PWM driving chip signal of the primary side transformer half-bridge switch MOS, and the synchronous rectification driving chip is not required, which has the good consistency, is suitable for the high-voltage output cases, and reduces the product cost. The circuit of the disclosure is simple, with a good consistency of the circuit, high circuit efficiency, reliable work, and better economic and social benefits.

Please refer to FIG. 40. The second embodiment of the disclosure provides the flyback switching power supply, which includes: the single-ended flyback converter 6100 and the synchronous rectification control circuit 6200. The input side and the output side of the single-ended flyback converter 6100 are connected with the power supply and the load respectively. The single-ended flyback converter 6100 rectifies an AC signal of the power supply according to the driving signal of the synchronous rectification control circuit 6200 and provides a stable DC output for the load at the back end.

Please refer to FIG. 39. The single-ended flyback converter 6100 includes the switch transistor Q1, the power transformer T1 and the synchronous rectifier Q2. The power transformer T1 includes the primary coil and the secondary coil and the phases of the primary coil and the secondary coil are opposite. The gate of the switch transistor Q1 is connected with the pulse width modulation signal (PWM), and the source of the switch transistor Q1 is grounded. The dotted end of the secondary side of the power transformer T1 is connected with the positive electrode of the load, and the non-dotted end of the secondary side of the power transformer T1 is connected with the drain of the synchronous rectifier Q2. The source of the synchronous rectifier Q2 is connected with the negative electrode of the load, and the gate of the synchronous rectifier Q2 is connected with the synchronous rectification control circuit 6200. The DC voltage is output to the load according to the driving signal output by the synchronous rectification control circuit 6200.

The synchronous rectification control circuit 6200 mainly includes the driving winding 6210, the separating module 6220 and the driving module 6230.

The driving winding 6210 is coupled with the input winding of the single-ended flyback converter 6100 and is in the same phase with the input winding of the primary side. With this method, the synchronous driving voltage level of the driving winding 6210 and the primary coil may be achieved. The non-dotted end of the driving winding 6210 are respectively connected with the output end of the separating module 6220 and the first input end of the driving module 6230, and the dotted end of the driving winding 6210 is grounded. The driving winding 6210 senses the magnetic field change of the primary side of the power transformer T1 and generates the corresponding AC voltage signal. Further, the synchronous rectification control circuit 6200 further includes the third resistance R3, which is connected in parallel to both ends of the driving winding. Through adjusting the resistance value of the third resistance R3, the magnitude of the AC voltage signal may be appropriately adjusted.

The input end of the separating module 6220 is connected with the PWM signal, and the output end of the separating module 6220 is further connected with the output end of the driving winding 6210 and the second input end of the driving module 6230. The separating module 6220 is used to realize the separation between the main circuit and the control circuit to avoid the influence of the disturbance signal on the control circuit Further, the separating module 6220 includes the optocoupler PC1 and the first resistance R1, two ends of the input side of the optocoupler PC1 are connected in parallel with the first resistance R1, the positive pole of the optocoupler PC1 at the input side is connected with the PWM signal, and the negative pole of the optocoupler PC1 at the input side is grounded. The collector of the output side of the optocoupler PC1 is connected with the non-dotted end of the driving winding 6210, and the emitter is connected with the second input end of the driving module 6230. Further, the separating module 6220 further includes the second resistance R2 and the diode D1. The first end of the second resistance R2 is connected with the PWM signal and the second end of the second resistance R2 is connected with the positive electrode of the input side of the optocoupler PC1. The resistance values of the first resistance R1 and the second resistance R2 may be appropriate to the PWM signal. The positive electrode of the diode D1 is connected with the non-dotted end of the driving winding 6210, and the negative electrode of the diode D1 is connected with the collector of the output side of the optocoupler PC1. When the non-dotted end of the driving winding 6210 is the high voltage level and the optocoupler PC1 is turned on, the high voltage level may be output to the driving module 6230 through output ends of the diode D1 and the optocoupler PC1.

It should be noted that, the optocoupler PC1 in this embodiment should be the high-speed separating photocoupler that may work under the high-speed switching mode. Through the high-speed separating photocoupler, the PWM driving signal of the primary side may be transmitted to the synchronous rectifier Q2 of the secondary side, which realizes the consistency of a high synchronous driving of the switching signal and the driving signal.

**The** output end of the driving module 6230 is connected with the control end of the synchronous rectifier of the single-ended flyback converter and is used to output the driving signal to the gate of the synchronous rectifier Q2. Further, the driving module 6230 includes the third MOS transistor Q3, the fourth MOS transistor Q4 and the fourth resistance R4. The gate of the third MOS transistor Q3 serves as the first input end of the driving module and is connected with the non-dotted end of the driving winding 6210. The drain of the third MOS transistor Q3 serves as the second input end of the driving module 6230 and is respectively connected with the output end of the separating module 6220, the gate of the fourth MOS transistor Q4 and the dotted end of the output winding of the single-ended flyback converter 6100. The source of the fourth MOS transistor Q4 is connected with the dotted end of the output winding of the single-ended flyback converter 6100 and the control end of the synchronous rectifier Q2 of the single-ended flyback converter 6100. The control end of the synchronous rectifier Q2 is grounded through the fourth resistance R4, and the source of the third MOS transistor Q3 and the drain of the fourth MOS resistance Q4 are respectively grounded. Further, the driving module 6230 further includes the fifth resistance R5. The first end of the fifth resistance R5 served as the first input end of the driving module 6320 is connected with the non-dotted end of the driving winding 6210, and the second end of the fifth resistance R5 is connected with the gate of the third MOS transistor Q3. Further, the driving module 6230 further includes the sixth resistance R6. The first end of the sixth resistance R6 served as the second input end of the driving module 6320 is connected with the output end of the separating module 6220, and the second end of the sixth resistance R6 is connected with the drain of the third MOS transistor Q3, the gate of the fourth MOS transistor Q4 and the dotted end of the output winding of the single-ended flyback converter 6100 respectively. Further, the driving module 6230 further includes the seventh resistance R7 and the eighth resistance R8. The first end of the seventh resistance R7 is connected with the second end of the sixth resistance R6, the drain of the third MOS transistor Q3 and the gate of the fourth MOS transistor Q4 respectively. The second end of the seventh resistance R7 is connected with the dotted end of the output winding of the single-ended flyback converter 6100. The first end of the eighth resistance R8 is connected with the source of the fourth MOS transistor Q4, the control end of the synchronous rectifier Q2 and an end of the fourth resistance R4 respectively. The second end of the eighth resistance R8 is connected with the dotted end of the output winding of the single-ended flyback converter 6100.

It should be noted that, in this embodiment, the third MOS transistor Q3 is the N-channel MOS transistor and the fourth MOS transistor Q4 is the P-channel MOS transistor.

With the above structure, both of the driving signal and switching signal of the single-ended flyback converter 6100 come from the PWM signal of the primary side, so that the flyback switching power supply may be used in the cases with higher output, which solves the problem of no synchronous rectification chip may be selected when the output voltage is high.

It should be understood that the flyback switching power supply of this embodiment may be of various types such as the LLC switching power supply or the double-transistor forward switching power supply.

**A working** principle of the flyback switching power supply is described below:
When the PWM signal of the gate of the switch transistor Q1 is the high voltage level, the switch transistor Q1 is turned on, and the current passes through the primary coils 2 to 1 of the power transformer T1. At the same time, the high voltage level of the PWM signal passes through the resistance R2 to the positive electrode of the input end of the optocoupler PC1, and the optocoupler PC1 is turned on. Since the phase of the driving winding 6210 is the same as that of the primary side of the power transformer T1, the voltage V1 at the non-dotted end of the driving winding 6210 is at the high voltage level. The high voltage level flows into the gate of the third MOS transistor Q3 through the fifth resistance R5 and into the drain of the third MOS transistor Q3 and the gate of the fourth MOS transistor Q4 through the sixth resistance R6, so that the third MOS transistor Q3 is turned on, the gate voltage level of the fourth MOS transistor Q4 is lowered and the fourth MOS transistor Q4 is turned on. At this time, the gate voltage V3 of the synchronous rectifier Q2 is pulled down, and the synchronous rectifier Q2 is closed. At this time, the power transformer T1 is in the energy storage state, and the circuit completes half of the working cycle.

When the PWM signal of the gate of the switch transistor Q1 is the low voltage level, the switch transistor Q1 is turned off, the optocoupler PC1 is turned off, the gate voltage V1 of the third MOS transistor Q3 is the low voltage level, and the third MOS transistor Q3 works in the cut-off state. According to the working principle of the flyback transformer, it may be known that when there is the current passing through the primary coil of power transformer T1, the secondary coil works in the energy charging state and the primary coil and the secondary coil have different poles. Therefore, when no current passes through the primary coils 2 to 1 of the power transformer T1, the electromotive force of the secondary coils 3 to 4 reverses. At this time, the dotted end of the secondary coil is at the high voltage level, and the high voltage level is turned on to the gate of the synchronous rectifier Q2 through the eighth resistance R8. Since the optocoupler PC1 is turned off due to the disappearance of the primary PWM signal, the third MOS transistor Q3 is turned off and the gate voltage V2 of the fourth MOS transistor Q4 cannot be connected with the low voltage level. At this time, the high voltage level at the dotted end of the secondary coil is turned on to the gate of the fourth MOS transistor Q4 through the seventh resistance R7. Since the fourth MOS transistor Q4 is the P-channel MOS transistor, the gate voltage V3 of the synchronous rectifier Q2 is maintained at the high voltage level and works in the off state, the synchronous rectifier Q2 is turned on and works in the rectification state, which supplies electric energy to the load at the back end until the gate voltage V3 turns to the low voltage level, and the whole circuit completes the complete rectification.

In summary, the synchronous rectification control circuit and the flyback switching power supply of the disclosure are improved on the basis of the conventional synchronous rectification topology circuit, and the single-ended flyback converter 6100 and the synchronous rectification control circuit 6200 are distinguished. When the device works abnormally or is damaged, the synchronous rectifier will not be damaged due to the damage of a control circuit device or will not be short-circuited. The primary side switch transistor and the secondary synchronous rectifier are controlled simultaneously by controlling the PWM driving chip signal of the primary side transformer half-bridge switch MOS, and the synchronous rectification driving chip is not required, which has the good consistency, is suitable for high-voltage output cases, and reduces product cost. The circuit of the disclosure is simple, with the good consistency of the circuit, the high circuit efficiency, the reliable work, and the better economic and social benefits. Therefore, the disclosure effectively overcomes some problems in the prior art, thereby having high utilization value.

The above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in the technical field without departing from the technical ideas disclosed in the disclosure shall still be covered by the claims of the disclosure.

## Claims

1. A battery pack, comprising:
a housing, the housing comprising a housing cavity;
at least one battery cell string, the battery cell string being arranged in the housing cavity and comprising a plurality of battery cells connected in series; and
a battery interface, the battery interface being connected to power tools for different working voltages;
wherein, the battery pack is capable of outputting at least two voltages through connecting different numbers of the battery cells in the battery cell string.

2. The battery back according to claim 1, the battery interface further comprising a negative terminal, a first positive terminal and a second positive terminal, a first number of the battery cells outputting a first voltage through the negative terminal and the first positive terminal, a second number of the battery cells outputting a second voltage through the negative terminal and the second positive terminal, the second number of battery cells being greater than the first number of battery cells.

3. The battery pack according to claim 1, the battery pack further comprising a switch unit, the battery interface comprising a negative terminal and a positive terminal, the negative terminal being electrically connected to a negative electrode of the battery cell string, the positive terminal being electrically connected to a first position and a second position of battery cell string, the switch unit comprising a first state and a second state, a first number of battery cells outputting a first voltage through the positive terminal and the negative terminal in the first state, a second number of battery cells outputting a second voltage through the positive terminal and the negative terminal in the second state.

4. The battery pack according to claim 1, the battery interface further comprising a negative terminal, a first positive terminal, a second positive terminal and a third positive terminal, a first number of the battery cells outputting a first voltage through the negative terminal and the first positive terminal, a second number of the battery cells outputting a second voltage through the negative terminal and the second positive terminal, a third number of the battery cells outputting a third voltage through the negative terminal and the third positive terminal, the second number of battery cells being greater than the first number, the third number being greater than the second number.

5. The battery pack according to claim 1, wherein,
the battery pack comprises a switch unit and the switch unit comprises a first state, a second state and a third state,
wherein, the battery interface comprises a negative terminal and a positive terminal,
wherein, the negative terminal is electrically connected with a negative electrode of the battery cell string,
wherein, the positive terminal is electrically connected with a first position, a second position and a third position of the battery cell string,
wherein, a first number of the battery cells between the first position and the negative electrode in the first state output a first voltage,
wherein, a second number of the battery cells between the second position and the negative electrode in the second state output a second voltage,
wherein, a third number of the battery cells between the third position and the negative electrode in the third state output a third voltage, and
wherein, the second number of battery cells is greater than the first number of battery cells, and the third number of battery cells is greater than the second number of battery cells.

6. The battery pack according to claim 1, wherein,
the battery pack comprises a plurality of the battery cell strings, the plurality of the battery cell strings is connected in parallel,
wherein, the battery interface comprises a first positive terminal, a second positive terminal and a negative terminal, the first positive terminal is electrically connected with a first position on each of the battery cell strings,
wherein, the second positive terminal is electrically connected with a second position on each of the battery cell strings,
wherein, the negative terminal is electrically connected to a negative electrode of each of the battery cell strings,
wherein, a first number of battery cells are connected in series between the first position and the negative electrode on each of the battery cell strings,
wherein, a second number of battery cells are connected in series between the
second position and the negative electrode on each of the battery cell strings, and the second number of battery cells is greater than the first number of battery cells, and
wherein, the battery pack outputs a first voltage through the first positive terminal and the negative terminal, and the battery pack outputs a second voltage through the second positive terminal and the negative terminal.

7. The battery pack according to claim 1, wherein,
the battery pack comprises a switch unit and a plurality of the battery cell strings, the plurality of the battery cell strings are connected in parallel,
wherein, the battery interface comprises a positive terminal and a negative terminal, wherein, the positive terminal is electrically connected with a first position, a second position and a third position on each of the battery cell strings,
wherein, the negative terminal is electrically connected to a negative electrode of each of the battery cell strings,
wherein, a first number of battery cells are connected in series between the first position and the negative electrode on each of the battery cell strings,
wherein, a second number of battery cells are connected in series between the second position and the negative electrode on each of the battery cell strings,
wherein, a third number of battery cells are connected in series between the third position and the negative electrode on each of the battery cell strings,
wherein, the second number of battery cells is greater than the first number of battery cells, and the third number of battery cells is greater than the second number of battery cells, and
wherein, the switch unit comprises a first state, a second state and a third state, and the positive terminal and the negative terminal output a first voltage in the first state, a second voltage in the second state and a third voltage in the third state.

8. The battery pack according to claim 1, wherein,
the battery pack further comprises a switch unit and the switch unit comprises a first state, a second state, a third state, and a fourth state,
wherein, the battery interface comprises a positive terminal and a negative terminal,
wherein, the positive terminal and the negative terminal in the first state output a first voltage,
wherein, the positive terminal and the negative terminal in the second state output a second voltage,
wherein, the positive terminal and the negative terminal in the third state receive an electrical energy input of the first voltage, and
wherein, the positive terminal and the negative terminal in the fourth state receive the electrical energy input of the second voltage.

9. The battery pack according to claim 1, wherein,
the battery pack further comprises a switch unit, and the switch unit comprises a first state, a second state and a third state,
wherein, the battery interface comprises a first positive terminal, a second positive terminal, a negative terminal and a charging positive terminal,
wherein, the battery pack in the first state outputs a first voltage through the first positive terminal and the negative terminal, or outputs a second voltage through the second positive terminal and the negative terminal,
wherein, the charging positive terminal and the negative terminal in the second state receive an electrical energy input of the first voltage, and
wherein, the charging positive terminal and the negative terminal in the third state receive the electrical energy input of the second voltage.

10. The battery pack according to claim 1, wherein,
the battery pack comprises a plurality of the battery cell strings connected in parallel,
wherein, the battery interface comprises a first positive terminal, a second positive terminal and a negative terminal, the negative terminal is electrically connected with negative electrodes of the plurality of the battery cell strings,
wherein, the first positive terminal is electrically connected with a first equipotential position on each of the battery cell strings and the battery pack outputs a first voltage through the first positive terminal and the negative terminal, and
wherein, the second positive terminal is electrically connected with a second equipotential position on each of the battery cell strings and the battery pack outputs a second voltage through the second positive terminal and the negative terminal.

11. The battery pack according to claim 10, wherein,
the battery cells in each of the battery cell strings are identical, a first number of battery cells in each of the battery cell strings output the first voltage through the negative terminal and the first positive terminal, a second number of the battery cells in each of the battery cell strings output the second voltage through the negative terminal and the second positive terminal, and the second number of battery cells is greater than the first number of battery cells.

12. The battery pack according to claim 10, the battery interface further comprising a third positive terminal, the third positive terminal being electrically connected with a third equipotential position on each of the battery cell strings, the battery pack outputting a third voltage through the third positive terminal and the negative terminal.

13. The battery pack according to claim 10, the battery pack further comprising a switch unit, the battery interface comprising a charging positive terminal, the switch unit comprising a first state, a second state and a third state, the battery pack in the first state outputting a first voltage through the first positive terminal and the negative terminal, or outputting a second voltage through the second positive terminal and the negative terminal, the charging positive terminal and the negative terminal in the second state receiving an electrical energy input of the first voltage, the charging positive terminal and the negative terminal in the third state receiving the electrical energy input of the second voltage.

14. The battery pack according to claim 13, the battery pack further comprising a control unit, the control unit being powered by part or all of the battery cells in the battery cell string, the switch unit comprising a first switch and a second switch, the control unit controlling the first switch and the second switch being closed or opened, the first switch controlling a circuit being closed or opened between the charging positive terminal and the first positive terminal, the second switch controlling a circuit being closed or opened between the charging positive terminal and the second positive terminal.

15. The battery pack according to claim 1, the battery pack further comprising a voltage detection unit and at least two charging terminals, each of battery cells being electrically connected with the voltage detection unit, the battery pack further comprising a communication port, the communication port being configured to communicate with a charger and/or a power tool, at least two charging terminals being electrically connected to the charger to receive at least two charging voltages.

16. A battery pack, comprising:
a housing, the housing comprising a housing cavity;
a plurality of battery cell strings, the battery cell strings being connected in parallel;
a battery interface, the battery interface being configured to be mechanically and electrically connectable with power tools for different working voltages, the battery interface comprising a positive terminal and a negative terminal; and
a switch unit, the switch unit being connected with the positive terminal and the plurality of the battery cell strings respectively, and the switch unit comprising a first state and a second state;
wherein, the positive terminal in the first state is electrically connected with a first equipotential position on each of the battery cell strings and the battery pack outputs a first voltage through the positive terminal and the negative terminal; and
wherein, the positive terminal in the second state is electrically connected with a second equipotential position on each of the battery cell strings and the battery pack outputs a second voltage through the positive terminal and the negative terminal.

17. The battery pack according to claim 16, the battery cells in each of the battery cell strings being identical, a first number of battery cells in the first state arranged in each of the battery cell strings outputting the first voltage through the positive terminal and the negative terminal, a second number of the battery cells in the second state arranged in each of the battery cell strings outputting the second voltage through the positive terminal and the negative terminal, the second number of battery cells being greater than the first number of battery cells, the battery pack being charged through the positive terminal and the negative terminal.

18. The battery pack according to claim 16, the battery pack further comprising a control unit, the control unit being powered by part or all of the battery cells arranged in the plurality of the battery cell strings, the switch unit comprising a first switch and a second switch, the control unit controlling the first switch and the second switch being closed or opened to switch between the first state and the second state, the first switch being arranged at a circuit between a first equipotential position and the positive terminal for switching the circuit being closed or opened and controlling a direction of current flow between the first equipotential position and the positive terminal, the second switch arranged at a circuit between a second equipotential position and the positive terminal for switching the circuit being closed and opened and controlling a direction of current flow between the second equipotential position and the positive terminal.

19. The battery pack according to claim 16, the switch unit further comprising a third state, the positive terminal in the third state being electrically connected with a third equipotential position on each of the battery cell strings, the battery pack outputting a third voltage through the positive terminal and the negative terminal, the battery cells in each of the battery cell strings being identical, a first number of the battery cells in the first state arranged in each of the battery cell strings outputting the first voltage through the positive terminal and the negative terminal, a second number of battery cells in the second state arranged in each of the battery cell strings outputting the second voltage through the positive terminal and the negative terminal, a third number of battery cells in the third state arranged in each of the battery cell strings outputting the third voltage through the positive terminal and the negative terminal, the second number of battery cells being greater than the first number of battery cells, the third number of battery cells being greater than the second number of battery cells.

20. The battery pack according to claim 16, the battery pack further comprising a control unit; the control unit being powered by part or all of the battery cells arranged in the plurality of the battery cell string, the switch unit comprising a first switch, a second switch and a third switch, the control unit controlling the first switch, the second switch and the third switch being closed or opened to switch between the first state, the second state, and the third state, the first switch being arranged at a circuit between a first equipotential position and the positive terminal for the circuit being closed or opened and controlling a direction of current flow between the first equipotential position and the positive terminal, the second switch being arranged at a circuit between a second equipotential position and the positive terminal for switching the circuit being closed or opened and controlling a direction of current flow between the second equipotential position and the positive terminal, the third switch being arranged at a circuit between a third equipotential position and the positive terminal for switching the circuit being closed or opened and controlling a direction of current flow between the third equipotential position and the positive terminal.

21. A battery pack, comprising:
a housing, the housing comprising a housing cavity;
at least one battery cell string, the battery cell string being arranged in the housing cavity, the battery cell string comprising at least two battery cell units, each of the battery cell unit comprising a plurality of battery cells connected in series; and
a battery interface, the battery interface being arranged on the housing and configured to be connectable with power tools for different working voltages, the battery interface comprising a plurality of output terminals;
wherein, when the power tools are connected to the battery interface with the different working voltages, the battery cell units output the different working voltages through the output terminals for driving the power tools in the different working voltages.

22. A battery pack, comprising:
a housing, the housing comprising a housing cavity;
a battery interface, the battery interface being configured to be connectable with power tools for different working voltages, the battery interface comprising a plurality of output terminals; and
at least one battery cell string, the battery cell string being arranged in the housing cavity, the battery cell string comprising a first battery group and a second battery group, the first battery group comprising a first number of battery cell units, the second battery group comprising a second number of the battery cell units, each of the battery cell units comprising a plurality of battery cells connected in parallel, the number of the battery cell units in the second battery group being greater than the number of battery cell units in the first battery group;
wherein, the first battery group outputs a first voltage through the output terminal, and the second battery group outputs a second voltage through the output terminal.

23. A battery pack, comprising:
a housing, the housing comprising a housing cavity;
at least one battery cell string, the battery cell string comprising a first battery cell unit and a second battery cell unit connected in series, the first battery cell unit comprising a first number of first battery cells connected in series, the second battery cell unit comprising a second number of second battery cells connected in series;
a battery interface, the battery interface being configured to be mechanically and electrically connectable with power tools for different working voltages, the power tools comprising a first power tool and a second power tool, the first power tool having a first voltage, the second power tool having a second voltage, the battery interface comprising a positive terminal and a negative terminal; and
a switch unit, the switch unit being connected with the positive terminal and the battery cell strings respectively, and the switch unit comprising a first state and a second state;
wherein, the first battery cell unit in the first state outputs the first voltage through the positive terminal and the negative terminal; and
wherein, the second battery cell unit in the second state outputs the second voltage through the positive terminal and the negative terminal.

24. A power tool system, comprising:
a battery pack, the battery pack comprising a first voltage output state and a second voltage output state, the battery pack comprising a housing, a battery interface and at least one battery cell string, the battery cell string comprising a first battery cell unit and a second battery cell unit, the first battery cell unit comprising a first number of first battery cells connected in series, the second battery cell unit comprising a second number of second battery cells connected in series, the first number of battery cells being less than the second number of battery cells; and
a first power tool and a second power tool, the first power tool having a first voltage, the second power tool having a second voltage, the first voltage being less than the second voltage, the first power tool and the second power tool being arranged a tool interface both to be matched and connected to the battery interface;
wherein, when the battery pack is in the first voltage output state, the first number of the battery cells in the battery cell string output the first voltage to the first power tool; and
wherein, when the battery pack is in the second voltage output state, the second number of battery cells in the battery cell string output the second voltage to the second power tool.

25. The power tool system according to claim 24, the battery pack further comprising a control unit and a communication port, the communication port being electrically connected with the control unit, the first power tool further comprising a first communication port being matched the communication port, the second power tool further comprising a second communication port being matched the communication port;
wherein, when the battery pack is connected with the first power tool, the communication port is electrically connected with the first communication port and the control unit controls the battery pack to output the first voltage; and
when the battery pack is connected with the second power tool, the communication port is electrically connected with the second communication port and the control unit controls the battery pack to output the second voltage.

26. A power tool system, comprising:
a battery pack, the battery pack comprising a housing, a battery interface and at least one battery cell string, the battery cell string comprising a plurality of battery cells connected in series;
a first power tool, the first power tool having a first working voltage, and the first power tool being arranged a first tool interface matched and connected with the battery interface; and
a second power tool, the second power tool having a second working voltage, and the second power tool being arranged a second tool interface matched and connected with the battery interface;
wherein, when the first power tool is connected with the battery pack, the first tool interface is connected with the battery pack interface, and a first number of battery cells in the battery cell string output a first voltage to the first power tool; and
wherein, when the second power tool is connected with the battery pack, the second tool interface is connected with the battery pack interface, and a second number of battery cells in the battery cell string output a second voltage to the second power tool.

27. A power tool system, comprising:
a first power tool, capable of working at a first working voltage, the first power tool comprising a first tool interface;
a second power tool, capable of working at a second working voltage, the second power tool comprising a second tool interface;
a first battery pack, the first battery pack comprising a first battery interface, the first battery pack comprising a plurality of battery cells and being capable of outputting a first working voltage; and
a second battery pack, the second battery pack comprising a second battery interface, the second battery pack comprising at least one battery cell string, the battery cell string comprising a plurality of battery cells connected in series,
when the first power tool is connected with the first battery pack, the first tool interface is connected with the first battery interface, and the first battery pack outputs the first working voltage,
when the first power tool is connected with the second battery pack, the first tool interface is connected with the second battery interface, and a first number of the battery cells connected in series in the battery cell string output the first working voltage to the first power tool, and
when the second power tool is connected with the second battery pack, the second tool interface is connected with the second battery interface, and a second number of the battery cells connected in series in the battery cell string output the second working voltage to the second power tool.

28. The power tool system according to claim 27, wherein the second power tool is not capable of being matched with the first battery pack, and the first battery interface and/or the second battery interface is arranged in a terminal groove, and a width of the terminal groove is 1 mm to 3 mm.

29. The power tool system according to claim 27, wherein the first battery interface comprises a first battery positive terminal and a first battery negative terminal, the second battery interface comprises a first positive terminal, a second positive terminal and a negative terminal, the first power tool comprises a first tool positive terminal and a first tool negative terminal, the second power tool comprises a second tool positive terminal and a second tool negative terminal, a horizontal distance between the first battery positive terminal and the first battery negative terminal is L1, a horizontal distance between the first positive terminal and the negative terminal is L2, L1 is substantially equal to L2, and a horizontal distance between the second positive terminal and the negative terminal is L3, wherein L3 is greater than L2.

30. The power tool system according to claim 27, the power tool system further comprising a third battery pack, the third battery pack comprising a plurality of the battery cells and a third battery interface, the third battery interface comprising a third battery positive terminal and a third battery negative terminal, the third battery pack outputting the second working voltage to the second power tool through being connected with the second power tool, a horizontal distance between the third battery positive terminal and the third battery negative terminal being L4, a horizontal distance between the second tool positive terminal and the second tool negative terminal being L5, L4 being substantially equal to L5, the third battery interface being different from the first battery interface.

31. The power tool system according to claim 27, wherein the first battery interface comprises a first guiding rail and a first buckle, the second battery interface comprises a second guiding rail and a second buckle, the first guiding rail and the second guiding rail are interchangeably connected with a same sliding groove on the second tool interface, and the first buckle and the second buckle are interchangeably connected with a same locking groove on the second tool interface.

32. A synchronous rectification control circuit, applied to a single-ended flyback converter, and comprising: a driving winding, a separating module and a driving module; wherein
the driving winding is coupled with an input winding of the single-ended flyback converter, a non-dotted end of the driving winding are respectively connected with an output end of the separating module and a first input end of the driving module, a dotted end of the driving winding is grounded;
an input end of the separating module is connected with a PWM signal, the output end of the separating module is further connected with a second input end of the driving module;
and an output end of the driving module is connected with a control end of a synchronous rectifier of the single-ended flyback converter.

33. The synchronous rectification control circuit according to claim 32, wherein, the separating module comprises an optocoupler and a first resistance, two ends of an input side of the optocoupler are connected in parallel with the first resistance, a positive pole of the input side of the optocoupler is connected with the PWM signal, a negative pole of the input side of the optocoupler is grounded, a collector of an output side of the optocoupler is connected with the non-dotted end of the driving winding, and an emitter is connected with the second input end of the driving module.

34. The synchronous rectification control circuit according to claim 33, wherein, the separating module further comprises a second resistance, a diode and a third resistance, a first end of the second resistance is connected with the PWM signal, a second end of the second resistance is connected with the positive pole of the input side of the optocoupler, a positive pole of the diode is connected with the non-dotted end of the driving winding, a negative pole of the diode is connected with the collector of the output side of the optocoupler, and two ends of the driving winding are connected in parallel with two ends of the third resistance.

35. The synchronous rectification control circuit according to claim 32, wherein, the driving module comprises a third MOS transistor, a fourth MOS transistor and a fourth resistance, a gate of the third MOS transistor serves as the first input end of the driving module and is connected with the non-dotted end of the driving winding, a drain of the third MOS transistor serves as the second input end of the driving module and is respectively connected with the output end of the separating module, a gate of the fourth MOS transistor and a dotted end of a output winding of the single-ended flyback converter, a source of the fourth MOS transistor is connected with a dotted end of the output winding of the single-ended flyback converter and a control end of the synchronous rectifier of the single-ended flyback converter, the control end of the synchronous rectifier is grounded through the fourth resistance, and a source of the third MOS transistor and a drain of the fourth MOS resistance are respectively grounded.

36. The synchronous rectification control circuit according to claim 35, wherein, the third MOS transistor is an N-channel MOS transistor, the fourth MOS transistor is a P-channel MOS transistor, the driving module further comprises a fifth resistance, a sixth resistance, a seventh resistance and an eighth resistance; a first end of the fifth resistance served as the first input end of the driving module is connected with the non-dotted end of the driving winding, a second end of the fifth resistance is connected with the gate of the third MOS transistor; a first end of the sixth resistance served as the second input end of the driving module is connected with the output end of the separating module, a second end of the sixth resistance is respectively connected with the drain of the third MOS transistor, the gate of the fourth MOS transistor, and the dotted end of the output winding of the single-ended flyback converter; a first of the seventh resistance is respectively connected with the second end of the sixth resistance, the drain of the third MOS transistor and the gate of the fourth MOS transistor, a second end of the seventh resistance is connected with the dotted end of the output winding of the single-ended flyback converter; a first end of the eighth resistance is respectively connected with the source of the fourth MOS transistor, the control end of the synchronous rectifier, and an end of the fourth resistance, and a second end of the eighth resistance is connected with the dotted end of the output winding of the single-ended flyback converter.

37. A switch power supply, comprising:
a single-ended flyback converter; and
a synchronous rectification control circuit, configured to provide a driving signal to the single-ended flyback converter, and comprising: a driving winding, a separating module and a driving module; wherein
the driving winding is coupled with an input winding of the single-ended flyback converter, an non-dotted end of the driving winding are respectively connected with an output end of the separating module and a first input end of the driving module, a dotted end of the driving winding is grounded;
an input end of the separating module is connected with a PWM signal, the output end of the separating module is further connected with a second input end of the driving module;
and an output end of the driving module is connected with a control end of a synchronous rectifier of the single-ended flyback converter.
